# EUROPEAN PATENT SPECIFICATION

(11) **EP 4 396 292 B1**
(45) Date of publication and mention of the grant of the patent: **06.08.2025**
(21) Application number: 22772480.4
(22) Date of filing: 30.08.2022
(51) Int. Cl.: C09C 1/36, C01G 23/047, C09D 5/36, C09D 5/38

(54) **WHITE AUTOMOTIVE COATING COMPOSITIONS BASED ON AQUEOUS COLLOIDAL TITANIUM DIOXIDE DISPERSIONS**
WEISSE AUTOMOBILLACKZUSAMMENSETZUNGEN BASIEREND AUF WÄSSRIGEN, KOLLOIDALEN TITANDIOXID DISPERSIONEN
COMPOSITIONS DE REVÊTEMENT BLANC D'AUTOMOBILE À BASE DE DISPERSION AQUEUSE D'OXIDE DE TITANE COLLOIDALE.

(30) Priority: 30.08.2021 EP 21193784
(43) Date of publication of application: 10.07.2024
(73) Proprietor: BASF Coatings GmbH, 48165 Münster (DE)
(72) Inventor: CZORNIJ, Zenon Paul, Brighton, Michigan 48116 (US); JOHNSON, Daniel W, Southfield, Michigan 48033 (US); ZHANG, Qingling, Southfiled, Michigan 48033 (US); WEAKS, Phyllis A, Troy, Michigan 48098 (US); BLUMENTHAL, Abraham Thomas, Middletown, Connecticut 06457 (US)
(74) Representative: BASF IP Association
(86) International application number: PCT/EP2022/074118
(87) International publication number: WO 2023/031224

(56) References cited:
- US-A- 4 753 829
- US-A1- 2016 130 450
- ABBAS ZAREEN ET AL: "Synthesis, characterization and particle size distribution of TiO2 colloidal nanoparticles", vol. 384, no. 1-3, 1 July 2011 (2011-07-01), AMSTERDAM, NL, pages 254 - 261, XP055894071, ISSN: 0927-7757, Retrieved from the Internet <URL:https://www.sciencedirect.com/science/article/pii/S092777571100238X/pdfft?md5=95c4ab1ffb50722e8dccc43deab5ba48&pid=1-s2.0-S092777571100238X-main.pdf> DOI: 10.1016/j.colsurfa.2011.03.064
- SALOU SAMANTHA ET AL: "Assessment of strategies for the formation of stable suspensions of titanium dioxide nanoparticles in aqueous media suitable for the analysis of biological fluids", ANALYTICAL AND BIOANALYTICAL CHEMISTRY, SPRINGER BERLIN HEIDELBERG, BERLIN/HEIDELBERG, vol. 412, no. 7, 8 February 2020 (2020-02-08), pages 1469 - 1481, XP037023249, ISSN: 1618-2642, [retrieved on 20200208], DOI: 10.1007/S00216-020-02412-2
- RODRIGUEZ P ET AL: "Deposition and characterisation of TiO"2 coatings on various supports for structured (photo)catalytic reactors", APPLIED CATALYSIS A: GENERAL, ELSEVIER, AMSTERDAM, NL, vol. 360, no. 2, 1 June 2009 (2009-06-01), pages 154 - 162, XP026089926, ISSN: 0926-860X, [retrieved on 20090320], DOI: 10.1016/J.APCATA.2009.03.013

## Description

The invention relates to aqueous colloidal titanium dioxide dispersions, particularly for use in coating composition, a method for producing such dispersions, coating compositions containing such dispersions as well as coating layers and coated substrates obtained by such coating, preferably even in multilayer arrangements, preferably suitable for automotive coating. The invention further relates to the use of such dispersions for the manufacture of coating compositions, particularly basecoat compositions, such as automotive basecoat compositions.

### TECHNOLOGICAL BACKGROUND

Currently, the color of white is the most popular color globally with more than a third of all cars produced falling in a white color space. The most commonly used white pigment in the field of automotive coatings is titanium dioxide. Thus, there is ongoing and even increasing desire to provide titanium dioxide formulations, which can be used in the manufacture of automotive coatings.

However, the generally used titanium dioxide pigments provide a characteristic yellow-gold color in the near off-specular angle range and a bluish tint at the far off-specular angle range. While the bluish tint at the flop angle is typically desired, the yellowish-golden color at near off-specular view prevents a pure white look and limits the possibility to create a wide range of pastel colors.

This problem does not only occur, if the white color coating composition itself it tinted with other pigments to create, e.g., pastel colors, it also limits the possibilities in case such layer formed from the conventional white coating composition is only one of a plurality of colored layers, which together contribute to the overall color impression.

The yellow color tint of titanium dioxide pigments is a known problem, when a neutral white color is desired in the specific application.

The yellow tint may have several causes. E.g., titanium pigments are in most cases produced via the so-called sulfate or chloride routes. Sulfate grade titanium oxide pigments generally have a higher yellow tint than chloride grade titanium dioxide pigments, which is believed to be due to impurities by other metal ions in the crystal lattice of the sulfate grade titania.

A further influence on the color tint is the particle size of titanium dioxide pigments. A coarser particle size distribution scatters red and green light preferentially. In this case, the blue light with its shorter wavelength passes a longer distance through the material and is therefore absorbed to a greater extent and thus appears yellowish. Particularly, gray colors with a blue tint appear fresher to the human eye than those with a yellow tint. Yellow tinted colors, particularly grey colors, thus have a "stained" appearance.

On the other hand, a fine particle size leads at some point to a loss of scattering power for longer wavelengths and, thereby, to a reduced hiding power.

There also exists a number of nano-titanium dioxides having mean particle sizes of less than 100 nm, which are produced by different methods, particularly methods making use of neutralization and/or hydrolysis of titanium-IV-alkoxylates, titanylsulfate or titanium tetrachloride. However, they are rather used as UV absorbers.

In US 4,753,829 titanium dioxide dispersions are used to produce opalescent automotive paint compositions, the micro titanium dioxide employed in the production of the paint compositions is employed in form of a mill base. While the specification of the micro titanium dioxide particles refers to a primary particle size of about 20 nm, this primary particle size is not to be confused with the measured particle sizes of such micro titanium dioxide powders, which is much higher due to the presence of agglomerates and aggregates before grinding. Thus, in Example 1 of US 4,753,829 micro titanium dioxide with a primary particle size of 20 nm is dispersed in a sand mill grinder down to a particle size less than 10 µm. This still indicates the presence of large amounts of agglomerates and aggregates in the meaning of DIN 53 (part 1): August 1972.

US 2016/130450 A1 describes dispersions, methods and coating compositions which may comprise a carrier comprising water, the pigment particles comprising titanium dioxide particles, the polymer backbone comprising a vinyl chain-growth polymer, the anionic group comprising a sulfonate group, the cationic group comprises a quaternary ammonium group, and the at least partially encapsulated pigment particles are self-coalescing at room temperature without requiring the presence of a film forming binder containing a polymer other than the chain-growth polymer.

The present invention aims to provide an aqueous a titanium dioxide dispersion which is suitable to be employed in preferably aqueous coating compositions, providing the coating compositions with a white color and the therewith obtained coating layers with a more neutral white color, i.e., with less yellow tint.

A further aim was to provide a simple method for producing such aqueous titanium dioxide dispersion from conventional titanium dioxide pigments by a solely mechanical procedure.

The titanium dioxide dispersions should further be suitable for use in effect pigment containing coating compositions such as metal effect pigment containing coating compositions and/or pearlescent pigment, e.g., mica pigment containing coating compositions.

Furthermore, the present invention aims to provide cured coating layers obtained from aqueous coating compositions containing the aqueous titanium dioxide dispersion and multi-layer coatings wherein at least one cured coating layer is obtained from an aqueous coating composition containing the aqueous titanium dioxide dispersion.

### SUMMARY

The first aim of the present invention was achieved by providing an aqueous colloidal titanium dioxide dispersion comprising
i. titanium dioxide particles, the titanium dioxide particles having
   a. a Z-average particle size in the range from 30 nm to 220 nm as determined by dynamic light scattering; and
   b. a particle size distribution span [(D90-D10)/(D50)] in the range from 0.7 to 1.5;
ii. one or more dispersing agents comprising groups which bind to the titanium dioxide particles; and
iii. if necessary, one or more pH value adjusting compounds.

The afore-mentioned aqueous colloidal titanium dioxide dispersion and the preferred embodiments thereof are hereinafter referred to as "colloidal titanium dioxide dispersions of the invention".

Further subject of the present invention is a method for producing the aqueous colloidal titanium dioxide dispersions of the invention, the method comprising the steps of
A. forming a pre-mix comprising
   a. one or more titanium dioxide pigments, the titanium dioxide pigments having
      i. a Z-average particle size > 220 nm as determined by dynamic light scattering, and/or
      ii. a particle size distribution span [(D90-D10)/(D50)] > 1.5
   b. one or more dispersing agents comprising groups which bind to the one or more titanium dioxide pigments; and
   c. if necessary, one or more pH value adjusting compounds;
      and
B. grinding the pre-mix obtained in step A by use of a bead mill or shaker mill until titanium dioxide particles are obtained, which have a Z-average particle size in the range from 30 nm to 220 nm as determined by dynamic light scattering and have a particle size distribution span [(D90-D10)/(D50)] in the range from 0.7 to 1.5; and
C. adjusting the pH value, if necessary, by use of one or more pH adjusting compounds.

The afore-mentioned method for producing the aqueous colloidal titanium dioxide dispersion of the invention is hereinafter denoted as method for preparation of the colloidal titanium dioxide dispersion of the invention.

Yet another object of the present invention is a titanium dioxide containing coating composition, comprising
(A) at least one film-forming polymer (A1), and in case of (A1) being externally crosslinkable, at least one crosslinking agent (A2);
(B) the components of the aqueous colloidal titanium dioxide dispersion of the invention as defined above;
(C) preferably at least one type of colorant and/or filler, the colorant being selected from the group consisting of dyes and pigments, the pigments being selected from color pigments and/or effect pigments.

The afore-mentioned titanium dioxide containing coating composition and its preferred embodiments are hereinafter denoted as coating compositions according to the invention.

Another object of the invention is coated substrate comprising a dried and/or cured coating layer formed from the coating composition according to the invention and a method of preparing such coated substrate comprising the step of applying a coating composition of the invention onto a substrate to form a coating layer and subsequently drying and/or curing the coating layer. The coating layer might be part of a multilayer coating.

Further object of the present invention is the use of the colloidal titanium dioxide dispersion of the invention in the manufacture of a coating composition, preferably an automotive coating composition.

If, besides a mandatory range defined for a feature, preferred and further preferred ranges are defined in the present invention, any of the lower limits of the respective ranges can also be combined with any of the upper limits of the respective ranges.

### DETAILED DESCRIPTION

### Aqueous Colloidal Titanium Dioxide Dispersion

### Titanium dioxide

The dispersion contains titanium dioxide particles having a Z-average particle size in the range from 30 nm to 220 nm, preferably in the range from 60 nm to 200 nm, more preferred in the range from 70 to 190 nm and even more preferred in the range from 80 to 185 nm as determined by dynamic light scattering.

Furthermore, the particles possess a narrow particle size distribution, which can be expressed by the volume-based particle size distribution span [(D90-D10)/(D50)] being in the range from 0.7 to 1.5, preferably being in the range from 0.8 to 1.3, more preferred being in the range from 0.85 to 1.2.

The volume-based particle size distribution span is calculated from the volume-based D10, D50 and D90 values which are also obtained by dynamic light scattering. D10 defines that the portion of particles with diameters smaller than this value is 10%. D50 defines that the portions of particles with diameters smaller this value are 50% and is also known as the median diameter. D90 defines that the portion of particles with diameters below this value is 90%.

Preferably, D10 values are < 150 nm, more preferred < 135 nm, even more preferred < 120 nm and most preferred < 105 nm such as < 100 nm. Preferably, D10 values are in the range from 50 nm to 150 nm, more preferred 60 to 140 nm and most preferred 60 to 110 nm.

D50 values are higher than the D10 values and preferably < 220 nm, more preferred < 200 nm, even more preferred < 180 nm and most preferred < 130 nm such as < 120 nm.

D90 values are higher than the D50 values and preferably < 350 nm, more preferred < 330 nm, even more preferred < 300 nm and most preferred < 250 nm such as < 200 nm.

Both, the Z-average particle size as well as the D values (D10, D50 and D90) can be determined with a Malvern Zetasizer as described in more detail in the experimental part of the specification.

Furthermore, the aqueous colloidal titanium dioxide dispersions are preferably essentially free from micron-sized titanium dioxide particles. This can be determined by the use of a Hegman gauge as describe in the experimental part of the specification.

The colloidal titanium dioxide dispersions are obtained by downsizing titanium dioxide pigments, particularly such pigments were the D50 median pigment particle size is in the micron range, preferably in a range from 1 to 100 µm, such as a range from 5 to 80 or 10 to 50 µm. Downsizing of micro titanium dioxide can be optimized by extending the grinding time and/or the surface area of the grinding media (e.g., the surface of the beads) by using small beads.

Many of these titanium dioxide pigments are surface-treated. As surface treatments, the oxides or hydroxides, respectively, of aluminum, silicon, zirconium and even titanium are widely used. The amounts of post-treatments are normally denoted as weight percent of the oxide based on the titania amount deployed in the surface treatment step. So, one would, for example, encounter an indication of "3 % Al₂O₃" as a surface treatment, although, in reality, the aluminum would be present as a mixture of oxides and hydroxides and, based on the final product, there would be less than 3 % of Al₂O₃ in the surface treatment. A surface-treatment can be carried out in one or more, such as two stages.

Typical reagents are NaAlO₂, Al₂(SO₄)₃, ZrOSO₄ and TiOSO₄. Metal halides are normally less appreciated as surface treatment chemicals due to their corrosiveness. By mixing basic and acidic precursor solutions, it is possible to simultaneously precipitate two different inorganic surface treatments, such as Al₂(SO4)₃ and Na₂SiO₃, to form, for example, aluminum silicate.

It Is emphasized that the term titanium dioxide pigment as used herein encompasses such surface treated titanium dioxide pigments.

With regard to colloidal chemistry, i.e., flocculation stabilization, a titanium dioxide with an aluminum oxide and/or zirconium oxide surface treatment behaves different from one having a surface treatment based on silicon dioxide. All of these, again, are different from a pure, untreated TiO₂.

Thus, depending on the nature of a possible surface treatment of the titanium dioxide pigment employed in the manufacture of the aqueous colloidal titanium dispersion of the present invention and the preferred pH range from 6.2 to 7.8 at 25 °C, the dispersing agent has to be chosen.

### Dispersing Agents

The aqueous colloidal titanium dioxide dispersion contains one or more dispersing agents (herein also called wetting and dispersing agents, wetting and dispersing additives or just dispersing additives) comprising groups which bind to the titanium dioxide particles preferably at the preferred pH range from 6.2 to 7.8 at 25 °C.

In case the surface charge of the titanium dioxide at the targeted pH range is positive, anionic dispersing agents are preferred. If the surface charge of the titanium dioxide is negative at the preferred pH range a cationic dispersing agent is preferred.

To determine the surface charge of a titanium dioxide in aqueous dispersion, the Zeta potential in dependency of the pH value can be determined by any known method. The pH value at which the zeta potential is zero is also called isoelectric point, because the particles have the same number of positive as negative charges within their planes of shear, so they appear to be uncharged. At a pH value below the pH value of the isoelectric point, the particles are charged positively, while at higher pH values they are charged negatively
Pure titanium dioxide typically has an isoelectric point between 4.5 and 6.5. Titanium dioxide obtained through the chloride process typically has an isoelectric point between 6.5 and 7, due to the doping with rather appreciable amounts of aluminum oxide that is partly on the surface of the particles. As explained above, modifying the pigment surface with inorganic layers of, for example, aluminum oxide, silicon dioxide or zirconium dioxide changes the isoelectric points. Whereas, for example, aluminum oxide (isoelectric point ≈ 9) shifts the isoelectric point to higher pH-values, other substances normally tend to reduce the isoelectric point to lower pH-values (isoelectric point of silicon dioxide ≈ 2, isoelectric point of zirconium dioxide ≈ 4).

The stabilization by the dispersing agents used in the present invention preferably follows the principle of an electrostatic stabilization. Thus, dispersing agents are preferably considered as electrostatic stabilizers.

There are many suitable dispersing agents commercially available. Particularly preferred are polymeric wetting and dispersion agents, more preferably those selected from the group of polyesters, polyurethanes, polycarboxylate ethers and polymers formed from ethylenically unsaturated monomers such as acrylic monomers or methacrylic monomers, vinyl monomers and/or ethylenically unsaturated dicarboxylic acids or their anhydrides. Amongst the afore-mentioned polymers those are particularly preferred which comprise carboxylic acid groups and/or their salts.

Particularly preferred are those dispersing agents which are commonly recommended for dispersing of titanium dioxide pigments.

Most preferred wetting and dispersion agents are polymers comprising (meth)acrylic monomers and those comprising vinyl monomers and ethylenically unsaturated dicarboxylic acids or their anhydrides. Amongst the afore-mentioned polymers those copolymers comprising vinyl polyethers and ethylenically unsaturated dicarboxylic acids or their anhydrides, such as maleic acid and its salts are even more preferred. Typically, the polyether moieties of the vinyl polyethers are hydrophilic such are polyethylene oxide, polypropylene oxides or poly(ethylene/propylene) oxides. A maleic acid-vinyl polyether copolymer is e.g., commercially available under the tradename Tego^{®} Dispers 752 W. Another suitable commercially available wetting and dispersion agent is Borchi^{®} Gen 1252, which belongs to the acrylic polymers and is available from Borchers Americas Inc. (Westlake, Ohio).

### Organic Solvents

The aqueous colloidal titanium dioxide dispersions of the present invention may optionally contain organic solvents. If organic solvents are contained in the aqueous colloidal titanium dioxide dispersions of the present invention, they are preferably those which are typically used in aqueous colloidal dispersions as cosolvents beside the water. Such organic solvents are preferably water-soluble in the amounts employed in the aqueous dispersions.

Preferred solvents are selected from the group consisting of alkanols, glycols, diglycols, glycol ethers, diglycol ethers, glycol esters, diglycol esters, glycol etheresters and diglycol etheresters. Amongst the afore-mentioned organic solvents, glycol monoethers and diglycol monoethers are even more preferred. Most preferred are alkyl dialkylene glycols, such as C₁-C₄-alkyl diethylene glycols and C₁-C₄-alkyl dipropylene glycols; and alkylene glycol mono alkyl ethers, such as ethylene glycol mono C₁-C₄-alkyl ethers and propylene glycol mono C₁-C₄-alkyl ethers. Examples for suitable organic solvents are, e.g., butyl diglycol and propylene glycol n-butyl ether.

### pH Value Adjusting Compounds

The aqueous colloidal titanium dioxide dispersion preferably has a pH value in the range of 6.2 to 7.8, preferably 6.4 to 7.6, more preferred 6.5 to 7.5, even more preferred 6.6 to 7.4 and most preferred 6.8 to 7.2 at 25 °C.

Generally, any organic or inorganic pH adjusting compounds can be used to adjust the pH value of the aqueous colloidal titanium dioxide dispersions of the invention. Preferably amines, like tertiary amines such as N,N-dialkylethanolamine as e.g., N,N-dimethylethanolamine can be used.

### Grinding Resins

A grinding resin or a grinding polymer is a resin or polymer used in a mill base during the grinding procedure. Typical grinding resins are those, which may also be used as film-forming polymers (A1) (as defined below) in the target systems, i.e., the coating compositions wherein the aqueous colloidal titanium dioxide dispersion are employed.

For further stabilization of the aqueous colloidal titanium dioxide dispersion one or more so-called grinding resins (also called grinding polymers) may be employed. The grinding resins are typically used in higher amounts than the dispersing agent.

The grinding resins preferably serve to sterically stabilize the aqueous colloidal titanium dioxide dispersion and are preferably considered as sterical stabilizers, rather than acting as an electrostatical stabilizer, as is typically the case for the dispersing agents.

The use of grinding resins in the preparation of the aqueous colloidal titanium dioxide dispersions of the present invention is not mandatory, but optional. The grinding resins used in the method of producing the aqueous colloidal titanium dioxide dispersions of the present invention are generally at least compatible with or in preferred cases identical to one or more resins comprised in the coating compositions in which the aqueous colloidal titanium dioxide dispersions of the invention are employed. Thus, the use of grinding resins may limit the number of target systems to those where such compatibility is achieved. Therefore, the preparation of mill bases without the use of grinding resins is typically preferred. However, in some cases grinding resins/polymers are used when the stabilization of the aqueous colloidal titanium dioxide dispersion by the dispersing agent alone is otherwise difficult.

Titanium dioxides undergo strong polar interactions and especially hydrogen bonding with functional groups of resins/polymers. Steric stabilization can come into effect either alone, or in combination with electrostatic stabilization. Examples for this are water soluble grinding resins that carry neutralized carboxyl groups. However, in that case, the negatively charged carboxyl groups rather extend into the solution than functioning as anchor groups to the pigment surface.

### Viscosity

The aqueous colloidal titanium dioxide particles containing dispersions preferably have a viscosity determined by use of a Brookfield Cap 1000+ viscometer using a #10 spindle at a shear rate of 500 s⁻¹ at 25 °C of 1 to 300 cPs, more preferred in the range from 1 to 220 cPs and even more preferred in the range from 1 to 200 cPs, most preferred in the range from 1 to 100 or 1 to 50 cPs and particularly preferred in the range from 1 to 10 cPs. More details are given in the experimental section of the present invention.

### Method for Preparing the Aqueous Colloidal Titanium Dioxide Dispersion

The method of preparing the aqueous colloidal titanium dioxide dispersion comprises the steps of forming a premix, composed as described above, grinding the pre-mix until the target Z-average particle size and particle size distribution span is obtained, and, if necessary, adjusting the pH value to be in the target pH range.

### Forming a Pre-mix

One or more titanium dioxide pigments, preferably one type of titanium dioxide pigment is pre-mixed with the one or more dispersing agents comprising groups which bind to the one or more titanium dioxide pigments, the optionally one or more grinding resins, the optionally one or more organic solvents, and, if necessary, the one or more pH adjusting compounds.

As titanium dioxide pigments, such titanium dioxide pigments are used which have a Z-average particle size > 220 nm as determined by dynamic light scattering, and/or a particle size distribution span [(D90-D10)/(D50)] > 1.5. Thus, the titanium dioxide pigments used in the method are larger than the colloidal titanium dioxide particles in the aqueous colloidal titanium dioxide dispersion to be produced by the method according to the invention and/or have a particle size distribution span which is broader, i.e., larger than 1.5.

The titanium dioxide pigments to be used in the method for producing the aqueous colloidal titanium dioxide dispersion of the invention typically possess larger average particle sizes (particularly Z-average particle sizes and D50 values) and have typically larger particle size distribution spans compared to the respective titanium dioxide particles after grinding. This is because the titanium dioxide pigments used in the method for producing the aqueous colloidal titanium dioxide dispersions of the present invention do not contain only primary particles, but also significant amounts of aggregates and agglomerates. In many cases the particle sizes reported on technical datasheets of such commercial titanium dioxide pigments which are used for producing the aqueous colloidal titanium dioxide dispersion of the invention just name the primary particle sizes or average primary particle sizes, which does not reflect the overall particle size as determined in the present invention. Therefore, the titanium dioxide pigments to be used in the method for producing the aqueous colloidal titanium dioxide dispersion of the invention the preferably possess a D50 median pigment particle size in the micron range, preferably in a range from 0.5 to 100 µm, such as a range from 1 to 80 µm or 5 to 50 µm.

The titanium dioxide pigments maybe pure titanium dioxide pigments or surface-treated titanium dioxide pigments. As surface treatments, the oxides or hydroxides, respectively, of aluminum, silicon, zirconium and even titanium are preferred. Most preferred as surface modifiers are the oxides and/or hydroxides of aluminum and/or zirconium. If an improved lightfastness is desired, it is preferred that the typically photochemically active titanium dioxides are surface-treated, with, inter alia, silicon dioxide or zirconium oxide.

Typical reagents used for surface treatment are NaAlO₂, Al₂(SO₄)₃, ZrOSO₄ and TiOSO₄. Metal halides are normally less appreciated as surface treatment chemicals due to their corrosiveness. By mixing basic and acidic precursor solutions, it is possible to simultaneously precipitate two different inorganic surface treatments, such as Al₂(SO4)₃ and Na₂SiO₃, to form, for example, aluminum silicate.

The one or more dispersing agents comprising groups which bind to the one or more titanium dioxide pigments, the optionally one or more grinding resins, the optionally one or more organic solvents, and, the one or more pH adjusting compounds are the same as already described above.

Pre-mixing of the ingredients can be carried out by use of any conventional mixing device, such as stirring blades, with 3- or 4-blade axial flow impellers, bore-mixed flow impeller blades (regular or high-pitch), and dissolver blades such as Cowles or Conn blades may be used. Suitable mixing may also be accomplished with air mixers or electrical mixers.

### Grinding the Pre-mix

In a second step the pre-mix obtained in the pre-mixing step is ground by use of a bead mill or shaker mill until the Z-average particle size is in the range from 30 nm to 220 nm as determined by dynamic light scattering and the particle size distribution span [(D90-D10)/(D50)] is in the range from 0.7 to 1.5, or any of the further preferred ranges for the Z-average particle size and particle distribution span.

The grinding step is preferably carried out under cooling to avoid a detrimental overheating of the dispersion.

The simplest form of a bead mill in the meaning of the present invention is a container filled with beads, wherein the beads are agitated during the grinding process. A very simple form of agitating is shaking the beads or stirring the beads.

The preferred bead mills used in this step are high energy ball mills such as e.g., Red Devil shaker mills or Skandex shaker mills from Lau GmbH.

The beads to be used in the grinding process are preferably spherical and preferably yttrium oxide stabilized zirconium oxide beads, such as YTZ^{®} milling beads available from Tosoh Corporation, Saint Gobain or Fox Industries. The preferred bead size (diameter) is preferably in the range from 0.05 mm to 5 mm, more preferred in the range from 0.1 mm to 3 mm and 0.2 mm to 2 mm, and most preferred in the range from 0.3 mm to 1 mm.

The grinding step can be carried out in one or more separate sub-steps. If grinding is carried out in two or more sub-steps, it is preferred that the size of the beads used in each step decreases in each step. The initial size of the beads used in a first sub-step typically depends on the size of the titanium dioxide particles employed in the method. E.g., if the titanium dioxide pigment has an average particle size of about 30 µm, the pre-mix maybe ground by using beads having a diameter of 1 mm in the first grinding sub-step and after separating the beads, the resulting one-time milled pre-mix maybe milled in a second sub-step with smaller sized beads such as beads having a diameter of 0.3 mm.

For a given pre-mix formulation, the used bead mill, the size of the beads and the grinding time determine the resulting parameters of the aqueous colloidal titanium dioxide in the dispersion, such as the Z-average particle size and the D values needed to calculate the particle size distribution span. Generally, the smaller the bead size and the longer the grinding period, the smaller the resulting titanium dioxide particles and the narrower the particle size distribution span.

### Adjusting the pH Value

During the grinding process, typically the pH value slightly changes to higher pH values. If necessary to further stabilize the aqueous colloidal titanium dioxide dispersions of the present invention pH adjusting compounds such as amines, preferably tertiary amines such as N,N-dimethylethanolamine can be used.

### Amounts of the Components in the Aqueous Colloidal Titanium Dioxide Dispersion

Preferred amounts of titanium dioxide in the aqueous colloidal titanium dioxide dispersions of the present invention range from 10 to 30 wt.-%, more preferred from 15 to 25 wt.-% and most preferred from 17 to 23 wt.-%, based on the total weight of the aqueous colloidal titanium dioxide dispersion.

Preferred amounts of dispersing agents in the aqueous colloidal titanium dioxide dispersions of the present invention range from 1 to 30 wt.-%, more preferred from 2 to 20 wt.-% and most preferred from 5 to 15 wt.-%, based on the total weight of the aqueous colloidal titanium dioxide dispersion.

Preferred amounts of the organic solvent in the aqueous colloidal titanium dioxide dispersions of the present invention, if present, range from 1 to 15 wt.-%, more preferred from 2 to 10 wt.-% and most preferred from 2 to 8 wt.-%, based on the total weight of the aqueous colloidal titanium dioxide dispersion.

Preferably, the amount of water in the aqueous colloidal titanium dioxide dispersion, is higher than the amount of any other ingredient in the aqueous colloidal titanium dioxide dispersion. More preferably, the amount of water in the aqueous colloidal titanium dioxide dispersion ranges from 30 to 89 wt.-%, even more preferred from 40 to 80 wt.-% and most preferred from 50 to 75 wt.-%, such as from 60 to 70 wt.-%, based on the total weight of the aqueous colloidal titanium dioxide dispersion.

Preferably, the aqueous colloidal titanium dioxide dispersion contains, besides water, titanium dioxide, the one or more dispersing additives, optionally one or more organic solvents and, optionally the one or more pH adjusting compounds, preferably less than 10 wt.-% of further compounds, more preferred less than 5 wt.-% of further compounds and most preferred less than 2 wt.% of further compounds such as 0 wt.-% of further compounds, based on the total weight of the aqueous colloidal titanium dioxide dispersion.

### Coating Compositions

A further object of the present invention is a titanium dioxide containing coating composition, comprising
(A) at least one film-forming polymer (A1), and in case of (A1) being externally crosslinkable, at least one crosslinking agent (A2);
(B) the components of the aqueous colloidal titanium dioxide dispersion of the invention as defined above;
(C) preferably at least one type of colorant and/or filler, the colorant being selected from the group consisting of dyes and pigments and the pigments being selected from color pigments and/or effect pigments.

The coating compositions of the present invention are preferably aqueous coating compositions. Furthermore, the coating compositions of the present invention are preferably basecoat compositions and even more preferred aqueous basecoat compositions (in the following also referred to as waterborne basecoat compositions). Preferably, the coating compositions are one-pack waterborne basecoat composition.

The term "basecoat" is known in the art and, for example, defined in Römpp Lexikon, "Lacke und Druckfarben" ("Paints and "Printing Inks"), Georg Thieme Verlag, 1998, 10th edition, page 57. A basecoat is therefore in particular used in automotive coating and general industrial paint coloring in order to give a coloring and/or an optical effect by using the basecoat as an intermediate coating composition. Basecoat compositions are generally applied to a metal or plastic substrate, optionally pretreated and/or precoated with a primer and/or filler, sometimes in the case of plastic substrates it might also be applied directly on the plastic substrate, and in the case of metal substrates on an electrodeposition coating layer coated onto the metal substrate or on the metal substrate already bearing a primer and/or filler and/or electrodeposition coating, or to already existing coatings in case of refinish applications, which can also serve as substrates. In order to protect a basecoat layer in particular against environmental influences, at least one additional clearcoat layer is applied to it. In mulitlayer coatings comprising at least three layers, the basecoat composition is also denoted as midcoat composition forming a midcoat layer, if the composition is applied onto at least one coating layer such as a filler layer or ground coat layer and covered by at least one further layer, such as a clearcoat layer.

The term "comprising" in the general context of the present invention and particularly in connection with the coating composition according to the invention has the meaning of "containing" rather than "consisting of". Particularly, "comprising" means that in addition to the components (A1), (A2), (B) and (C), one or more of the other components mentioned hereinafter may optionally be contained in the coating composition according to the invention. All components can be present in each case in accordance with their preferred embodiments mentioned below.

The proportions and amounts in wt.-% (i.e., % by weight) of all components (A1), (A2), (B) and (C) and further optionally present components in the coating composition according to the invention add up to 100 wt.-%, based on the total weight of the coating composition.

The solids content of the basecoat or midcoat coating composition according to the invention is preferably >16 % or >18 % or >20 % or >22 % by weight, in each case based on the total weight of the basecoat or midcoat coating composition. The determination of the solids content, i.e., the non-volatile content, is carried out according to the method described hereinafter in the method section of the present invention.

The solids content of a coating composition of the present invention is determined by drying a sample of the coating compositions (approx. 1 g) for 60 min at 110 °C. The weight of the dry residue divided by the weight of the sample and multiplied by 100 is the solids content in wt.-%.

Preferably, the solids content of the basecoat or midcoat coating composition according to the invention is in a range from 15 to 30 wt.-%, more preferably from 16 to 27 wt.-%, most preferably from 17 to 25 wt.-%, in particular from 18 to 22 wt.%, in each case based on the total weight of the basecoat or midcoat coating composition.

If the coating composition of the present invention is a ground coat coating composition, the solids content is preferably >33 % or >35 % by weight, in each case based on the total weight of the ground coat coating composition.

Preferably, the solids content of the ground coat coating composition according to the invention is in a range from 25 to 40 wt.-%, more preferably from 27 to 37 wt.-%, most preferably from 30 to 37 wt.-%, in particular from 33 to 36 wt.%, in each case based on the total weight of the ground coat coating composition.

The preparation of the coating composition can be carried out using customary and known preparation and mixing methods and mixing units, or using conventional dissolvers and/or stirrers.

### Film-forming polymer (A1)

The inventive coating composition comprises at least one film-forming polymer as film-forming binder (A1) of the coating composition.

For the purposes of the present invention, the term (A1) is understood to be the non-volatile constituent of a coating composition, which is responsible for the film formation, excluding additives, particularly excluding the further additives (E). Preferably, at least one polymer of the at least one polymer (A1) is the main binder of the coating composition. As the main binder in the present invention, a binder component is preferably referred to, when there is no other binder component in the coating composition, which is present in a higher proportion based on the total weight of the coating composition.

The term "polymer" is known to the person skilled in the art and, for the purposes of the present invention, encompasses polyadducts and polymerizates as well as polycondensates. The term "polymer" includes both homopolymers and copolymers.

The at least one polymer used as component (A1) may be physically drying, self-crosslinkable or externally crosslinkable. Suitable polymers which can be used as component (A1) are, for example, described in EP 0 228 003 A1, DE 44 38 504 A1, EP 0 593 454 B1, DE 199 48 004 A1, EP 0 787 159 B1, DE 40 09 858 A1, DE 44 37 535 A1, WO 92/15405 A1 and WO 2005/021168 A1.

The at least one polymer used as component (A1) is preferably selected from the group consisting of polyurethanes, polyureas, polyesters, polyamides, poly(meth)acrylates and/or copolymers of the structural units of said polymers, in particular polyurethane-poly(meth)acrylates and/or polyurethane polyureas. The at least one polymer used as component (A1) is particularly preferably selected from the group consisting of polyurethanes, polyesters, poly(meth)acrylates and/or copolymers of the structural units of said polymers. The term "(meth) acryl" or "(meth) acrylate" in the context of the present invention in each case comprises the meanings "methacrylic" and/or "acrylic" or "methacrylate" and/or "acrylate".

Preferred polyurethanes are described, for example, in German patent application DE 199 48 004 A1, page 4, line 19 to page 11, line 29 (polyurethane prepolymer B1), in European patent application EP 0 228 003 A1, page 3, line 24 to page 5, Line 40, European Patent Application EP 0 634 431 A1, page 3, line 38 to page 8, line 9, and international patent application WO 92/15405, page 2, line 35 to page 10, line 32.

Preferred polyesters are described, for example, in DE 4009858 A1 in column 6, line 53 to column 7, line 61 and column 10, line 24 to column 13, line 3 and Example D; or in WO 2014/033135 A2, page 2, line 24 to page 7, line 10 and page 28, line 13 to page 29, line 13. Likewise, polyesters may have a dendritic structure, as described, for example, in WO 2008/148555 A1.

Preferred polyurethane-poly(meth)acrylate copolymers (e.g., (meth)acrylated polyurethanes)) and their preparation are described, for example, in WO 91/15528 A1, page 3, line 21 to page 20, line 33 and in DE 4437535 A1, page 2, line 27 to page 6, line 22 described.

Preferred poly(meth) acrylates are those which can be prepared by multistage free-radical emulsion polymerization of olefinically unsaturated monomers in water and/or organic solvents. For example, seed-core-shell polymers (SCS polymers) are particularly preferred. Such polymers or aqueous dispersions containing such polymers are known, for example, from WO 2016/116299 A1.

Preferred polyurethane-polyurea copolymers are polyurethane-polyurea particles, preferably those having an average particle size of 40 to 2000 nm, the polyurethane-polyurea particles, each in reacted form, containing at least one isocyanate group-containing polyurethane prepolymer containing anionic and/or groups which can be converted into anionic groups and at least one polyamine containing two primary amino groups and one or two secondary amino groups. Preferably, such copolymers are used in the form of an aqueous dispersion. Such polymers can in principle be prepared by conventional polyaddition of, for example, polyisocyanates with polyols and polyamines.

The polymer used as component (A1) preferably has reactive functional groups which enable a crosslinking reaction. Any common crosslinkable reactive functional group known to those skilled in the art can be present. Preferably, the polymer used as component (A1) has at least one kind of functional reactive groups selected from the group consisting of primary amino groups, secondary amino groups, hydroxyl groups, thiol groups, carboxyl groups and carbamate groups. Preferably, the polymer used as component (A1) has functional hydroxyl groups.

Preferably, the polymer used as component (A1) is hydroxy-functional and more preferably has an OH number in the range of 10 to 500 mg KOH/g, more preferably from 40 to 200 mg KOH/g.

The polymer used as component (A1) is particularly preferably a hydroxy-functional polyurethane-poly(meth)acrylate copolymer, a hydroxy-functional polyester and/or a hydroxy-functional polyurethane-polyurea copolymer.

In addition, the coating composition of the present invention may contain at least one typical crosslinking agent known per se. Crosslinking agents are to be included among the film-forming non-volatile components of a coating composition, and therefore fall within the general definition of the "binder". Crosslinking agents are thus to be subsumed under the component (A).

### Crosslinking Agent (A2)

If (A1) is externally crosslinkable, a crosslinking agent (A2) is needed for crosslinking, which preferably is at least one aminoplast resin and/or at least one blocked or free, preferably blocked polyisocyanate, and most preferably an aminoplast resin. Among the aminoplast resins, melamine resins such as melamine-formaldehyde resins are particularly preferred.

### Components of the Aqueous Colloidal Titanium Dioxide Dispersion (B)

The coating composition further comprises the components of the aqueous colloidal titanium dioxide dispersion, i.e., **(B1)** water; **(B2)** titanium dioxide particles as described for the aqueous colloidal titanium dioxide dispersion of the invention; **(B3)** one or more dispersing agents comprising groups which bind to the titanium dioxide particles as described for the aqueous colloidal titanium dioxide dispersion of the invention; **(B4)** optionally one or more grinding resins as described for the aqueous colloidal titanium dioxide dispersion of the invention; **(B5)** optionally one or more organic solvents as described for the aqueous colloidal titanium dioxide dispersion of the invention; and, if necessary, **(B6)** one or more pH value adjusting compounds. The afore-mentioned components **(B1)** to **(B6)** and their preferred embodiments are the same as described above for the aqueous colloidal titanium dioxide dispersion of the invention.

### Colorants and Fillers (C)

The coating compositions of the invention preferably further contain a colorant and/or a filler, the colorant being selected from the group consisting of dyes **(C1)** and pigments **(C2),** and the pigments being selected from color and/or effect pigments.

The term "dyes" **(C1)** (also called dyestuffs) denotes, contrary to pigments, colorants which are soluble in the surrounding medium. Suitable dyes can be organic or inorganic.

The term "pigments" **(C2)** denotes powdery or platelet-shaped colorants, which contrary to dyes, are essentially insoluble in the surrounding medium. The term includes color pigments and effect pigments. A person skilled in the art is familiar with the term effect pigments. A corresponding definition can be found, for example, in Römpp Lexikon, Lacke und Druckfarben, Georg Thieme Verlag, 1998, 10th Edition, pages 176 and 471.

A person skilled in the art is familiar with the concept of color pigments. The terms "coloring pigment" and "color pigment" are interchangeable. As a color pigment inorganic and/or organic pigments can be used. Preferably, the color pigment is an inorganic color pigment. Particularly preferred color pigments used are white pigments, colored pigments and/or black pigments. Examples of white pigments are titanium dioxide pigments, zinc white, zinc sulfide and lithopone. Examples of black pigments are carbon black, iron manganese black and spinel black. Examples of colored pigments are chromium oxide, chromium oxide hydrate green, cobalt green, ultramarine green, cobalt blue, ultramarine blue, manganese blue, ultramarine violet, cobalt and manganese violet, iron oxide red, molybdate red and ultramarine red, iron oxide brown, mixed brown, spinel and corundum phases and chromium orange, iron oxide yellow, nickel titanium yellow, chrome titanium yellow, cadmium sulfide, cadmium zinc sulfide, chrome yellow and bismuth vanadate.

Effect pigments are preferably pigments, which have an optical effect or a color and optical effect. Examples of effect pigments are platelet-shaped metallic effect pigments such as platelet-shaped aluminum pigments, gold bronzes, fire-colored bronzes and/or iron oxide-aluminum pigments, pearlescent pigments and/or metal oxide coated mica pigments.

The term "metal effect pigment" is used in accordance with EN ISO 18451-1:2019 (Pigments, dyestuffs and extenders - Terminology - Part 1). Metal effect pigments are defined as platelet-shaped pigments consisting of metal. In the present invention the term "consisting of metal" does not exclude surface modifications of the metal effect pigments such as the presence of additional oxide layers, as e.g., a silicon dioxide layer. The term "metal" as used in the term "metal effect pigments" includes metals and metal alloys, likewise. Metal effect pigments - as already lined out above - can be orientated in parallel and show then metallic gloss due to light reflection at the flakes.

Typical metals and alloys used in metal effect pigments are aluminum, and its alloys. Most suitable and preferred in the present invention are platelet-shaped aluminum effect pigments, which might be coated or uncoated and which are preferably coated, particularly in case of the preferred aluminum pigments to inhibit their reaction with water in aqueous basecoat compositions. Such inhibition can e.g., be achieved by the use of organo-phosphorous stabilization; passivating the aluminum pigments with a conversion layer, e.g., by chromating; encapsulation with a protective layer, such as a polymer coating or a silica coating (Peter Wißling, "Metallic Effect Pigments", Vincentz Network 2006, pp. 85-89). Such aluminum effect pigments are e.g., commercially available from ECKART GmbH (Germany) under the tradenames STAPA^{®} Hydroxal (stabilized), STAPA^{®} Hydrolux (chromated) and STAPA^{®} Hydrolan (silica encapsulated). Further modification of the pigment surfaces is also possible, e.g., by modification with non-polar groups, such as alkyl groups leading to a so-called semi-leafing effect.

The metal effect pigments, particularly aluminum effect pigments, may be coated with an oxide layer, such as a silica layer, which further helps to stabilize the pigments against mechanical impact und particularly improves circulation line stability. In the present invention silica encapsulated aluminum metal effect pigments are most preferred. Preferably, the amount of silica, based on the sum of the amounts of aluminum and silica in such preferred aluminum effect pigments ranges from 3 to 15 wt.-% more preferred from 5 to 12 wt.-% and most preferred from 6 to 10 wt.-%. However, the term "metal effect pigment" encompasses such coated pigments and the total weight of such coated metal effect pigment is understood to be the weight of the metal effect pigment. Thus, the weight includes the coating material.

The term "filler" **(C3)** is known to the person skilled in the art, for example from DIN 55943 (date: October 2001). For the purposes of the present invention, a "filler" is understood to mean a substance which is essentially insoluble in the application medium, for example the coating composition according to the invention and which is used in particular for increasing the volume. In the context of the present invention, "fillers" preferably differ from "pigments" by their refractive index, which for fillers is <1.7, but for pigments is ≥1.7. Examples of suitable fillers are kaolin, dolomite, calcite, chalk, calcium sulfate, barium sulfate, talc, silicic acids, in particular pyrogenic silicic acids, hydroxides such as aluminum hydroxide or magnesium hydroxide, glass flakes and the like or organic fillers such as textile fibers, cellulose fibers and / or polyethylene fibers; in addition, reference is made to Römpp Lexikon Lacke und Druckfarben, Georg Thieme Verlag, 1998, pages 250 ff., "Fillers".

The colloidal titanium dioxide particles contained in the aqueous colloidal titanium dioxide dispersion of the invention and in the coating compositions of the invention do neither belong to the colorants **(C1)** and **(C2)** nor to the fillers **(C3)** in the context of the present invention.

The amount of **(C)** in the coating composition of the present invention, preferably a basecoat composition, is preferably in the range from 0.5 to 10 wt.-%, more preferred in the range from 1 to 8 wt.-% and most preferred in the range from 1.5 to 6 wt.-%, based on the total weight of the coating composition.

### Further solvents (D)

Besides the water and organic solvents introduced via the aqueous colloidal titanium dioxide dispersions of the invention, the inventive coating composition comprises further amounts of water and/or further amounts of one or more organic solvents as component **(D).** The further amounts of organic solvents can be chosen from the same organic solvents as used in the aqueous colloidal titanium dioxide dispersions of the invention or can differ therefrom.

The total amount of water and/or organic solvent being present in the coating composition is the difference between the total weight of the composition and its solids content.

When the inventive coating composition mainly comprises water as a volatile component, it is named an aqueous or waterborne composition. In this particularly preferred case, it is a coating composition comprising organic solvents in minor proportions.

All conventional organic solvents known to those skilled in the art can be used as organic solvents for the preparation of the coating composition of the invention. The term "organic solvent" is known to those skilled in the art, in particular from Council Directive 1999/13 / EC of 11 March 1999. Preferably, the one or more organic solvents are selected from the group consisting of monohydric or polyhydric alcohols, for example, methanol, ethanol, 1-propanol, 2-propanol, 1-butanol, ethylene glycol, ethyl glycol, propyl glycol, butyl glycol, butyl diglycol, 1,2-propanediol and/or 1,3-propanediol; ethers, for example diethylene glycol dimethyl ether; aliphatic hydrocarbons, aromatic hydrocarbons, for example toluene and/or xylenes; ketones, for example acetone, N-methylpyrrolidone, N-ethylpyrrolidone, methyl isobutyl ketone, isophorone, cyclohexanone, methyl ethyl ketone; esters, for example methoxypropyl acetate, ethyl acetate and/or butyl acetate; amides, for example dimethylformamide and mixtures thereof.

### Further optional components of the coating composition (E)

The inventive coating composition may optionally comprise one or more components, which are different from each of components (A1), (A2), (B), (C) and (D).

The coating composition of the present invention may contain one or more commonly used additives (E) depending on the desired application. For example, the coating composition may comprise at least one additive selected from the group consisting of reactive diluents, such as polypropylene diols, light stabilizers, antioxidants, deaerators, emulsifiers, slip additives, polymerization inhibitors, plasticizers, initiators for free-radical polymerizations, adhesion promoters, flow control agents, film-forming auxiliaries, sag control agents (SCAs), flame retardants, corrosion inhibitors, siccatives, biocides and/or matting agents. They can be used in the known and customary proportions. Preferably, their content, based on the total weight of the coating composition according to the invention is 0.01 to 25 wt.-%, more preferably 0.05 to 20 wt.-%, particularly preferably 0.1 to 15 % by weight, most preferably from 0.1 to 10 % by weight, especially from 0.1 to 7 % by weight and most preferably from 0.1 to 5 % by weight.

Amongst the additives, the coating composition according to the invention may optionally contain at least one thickener or rheology agent. Examples of such thickeners are inorganic thickeners, for example metal silicates such as sheet silicates, and organic thickeners, for example poly(meth)acrylic acid thickeners and/or (meth)acrylic acid (meth)acrylate copolymer thickeners, polyurethane thickeners and polymeric waxes. The metal silicate is preferably selected from the group of smectites. The smectites are particularly preferably selected from the group of montmorillonites and hectorites. In particular, the montmorillonites and hectorites are selected from the group consisting of aluminum-magnesium silicates and sodium-magnesium and sodium-magnesium fluorine-lithium phyllosilicates. These inorganic phyllosilicates are marketed, for example, under the trademark Laponite^{®}. Thickeners based on poly(meth) acrylic acid and (meth) acrylic acid (meth) acrylate copolymer thickeners are optionally crosslinked and or neutralized with a suitable base. Examples of such thickening agents are "Alkali Swellable Emulsions" (ASE), and hydrophobically modified variants thereof, the "Hydrophically Modified Alkali Swellable Emulsions" (HASE). Preferably, these thickeners are anionic. Corresponding products such as Rheovis^{®} AS 1130 are commercially available. Polyurethane based thickeners (e.g., polyurethane associative thickeners) are optionally crosslinked and/or neutralized with a suitable base. Corresponding products such as Rheovis^{®} PU 1250 are commercially available. Examples of suitable polymeric waxes are optionally modified polymeric waxes based on ethylene-vinyl acetate copolymers. A corresponding product is commercially available, for example, under the name Aquatix^{®} 8421.

It at least one thickener is present in the coating composition according to the invention, it is preferably present in an amount of at most 10 % by weight, more preferably at most 8 % by weight, most preferably at most 4 % by weight, especially at most 2 % by weight. %, most preferably not more than 1 % by weight, based in each case on the total weight of the coating composition. The minimum amount of thickener is preferably in each case 0.1% by weight, based on the total weight of the coating composition.

### Amounts of the Components in the Coating Compositions

Based on the total weight of the coating composition of the invention, the coating compositions preferably comprises
20 to 40 wt.-%, more preferably 26 to 36 wt.-% of film-forming polymers (A1);
3.5 to 8.5 wt.-%, more preferably 4.5 to 6.5 wt.-% of cross-linking agents (A2);
0.15 to 2.00 wt.-%, more preferably 0.3 to 0.8 wt.-% of titanium dioxide particles (B2) having a Z-average particle size in the range from 30 nm to 220 nm as determined by dynamic light scattering and having a particle size distribution span [(D90-D10)/(D50)] in the range from 0.7 to 1.5;
0.10 to 2.00 wt.-%, more preferably 0.15 - 0.80 wt.-% of one or more dispersing agents (B3) comprising groups which bind to the titanium dioxide particles; and optionally one or more organic solvents (B5).

### Method of Preparing a Coated Substrate and thus Coated Substrates

Further object of the present invention is a method of preparing a coated substrate comprising the step of applying a titanium dioxide containing coating composition of the invention onto a substrate to form a coating layer and subsequently drying and/or curing the coating layer.

More preferably the method of preparing a coated substrate comprises
(a) applying the inventive coating composition, preferably a basecoat composition at least partially onto at least one surface of an optionally pre-coated substrate to form a coating layer on the surface of the substrate; and
(b) drying and/or curing the coating layer obtained after performing of step (a) to form a coating on the surface of the substrate.

The method is preferably used to prepare a multilayer-coated substrate, in that it comprises the step of applying an inventive coating composition onto a substrate and drying and/or curing the coating layer, whereby the substrate is a substrate which is precoated with at least one coating composition and/or the coating layer formed by applying and drying and/or curing the inventive coating composition is post-coated by at least one coating composition to form a topcoat layer. The topcoat layer is preferably a clearcoat layer, more preferred a two-component polyurethane clearcoat layer. The multilayer coating can comprise a baked or non-baked primer layer.

All preferred embodiments described hereinabove in connection with the inventive aqueous colloidal titanium dioxide dispersion and the inventive coating composition, and the preferred embodiments thereof, are also preferred embodiments of the inventive methods of preparing a coated or multilayer-coated substrate.

When the inventive coating composition is a - preferably aqueous - basecoat coating composition, steps (a) and (b) are preferably carried out onto at least one surface of a pre-coated substrate, if the substrate is a metal substrate. Said metal substrate then preferably bears a primer and/(or) an electrodeposition coating as pre-coating layers and/(or) a conversion coating layer as pre-treatment.

If the substrate is a plastic (polymeric) substrate, it may be a pre-coated substrate, which, e.g., bears a primer coating, but does not have to. Independent of the substrate used, after having performed step (a) or steps (a) and (b), preferably a clearcoat composition is applied onto the basecoat coating formed by making use of the inventive coating composition.

The inventive coating composition can be coated on an object by numerous techniques well-known in the art, including spray coating, drop coating, dip coating, roll coating, curtain coating, and other techniques. Preferably, the inventive coating compositions are applied by spray coating, more preferred by pneumatic or electrostatic spray coating. It can be applied wet-on-wet, but does not have to.

The substrate used can be a plastic substrate, i.e., a polymeric substrate. Preferably, thermoplastic polymers are used as such substrates. Suitable polymers are poly(meth)acrylates including polymethyl(meth)acrylates, polybutyl (meth)acrylates, polyethylene terephthalates, polybutylene terephthalates, polyvinylidene fluorides, polyvinyl chlorides, polyesters, including polycarbonates and polyvinyl acetate, polyamides, polyolefins such as polyethylene, polypropylene, polystyrene, and also polybutadiene, polyacrylonitrile, polyacetal, polyacrylonitrile-ethylene-propylene-diene-styrene copolymers (A-EPDM), ASA (acrylonitrile-styrene-acrylic ester copolymers) and ABS (acrylonitrile-butadiene-styrene copolymers), polyetherimides, phenolic resins, urea resins, melamine resins, alkyd resins, epoxy resins, polyurethanes, including TPU, polyetherketones, polyphenylene sulfides, polyethers, polyvinyl alcohols, and mixtures thereof. Polycarbonates and poly(meth)acrylates are especially preferred. The substrate can also be a composite substrate such as a fiber reinforced substrate containing e.g., glass fibers, carbon fibers or polymeric fibers such as polyamide fibers. The substrate can also consist of multiple polymeric layers.

The substrate used can also be a metal such as steel or galvanized steel and aluminum or alloys of these. Further, the substrate used can be glass or textiles, in particular glass.

### Coated or Multilayer-coated Substrates

A further subject-matter of the present invention is an at least partially coated substrate obtainable by one of the afore-mentioned methods for producing a coated or preferably multilayer coated substrate.

All preferred embodiments described hereinabove in connection with the inventive aqueous colloidal titanium dioxide dispersions and coating compositions, as well as the inventive methods and the preferred embodiments thereof, are also preferred embodiments of the inventive coated or multilayer-coated substrates.

The coated substrates are preferably automotive bodies and parts thereof.

### Use of the Aqueous Colloidal Titanium Dioxide Dispersions

A further subject-matter of the present invention is a use of the inventive aqueous colloidal titanium dioxide dispersions for preparing coating compositions, preferably aqueous coating compositions, such as aqueous basecoat compositions, particularly aqueous automotive basecoat compositions.

All preferred embodiments described hereinabove in connection with the inventive aqueous colloidal titanium dioxide dispersions and coating compositions, as well as the inventive methods and the coated or multi-layer coated substrates, and the preferred embodiments thereof, are also preferred embodiments of the inventive use.

### EXAMPLES

In the following all amounts are in parts by weight and all percentage values are in weight-%, if not indicated otherwise.

### Pigment Pastes A and B

Pigment Pastes A and B are aqueous colloidal titanium dioxide particle containing dispersions.

### Paste A

The ingredients of Paste A are shown in Table 1. The micronized titanium dioxide is a zirconium oxide and aluminum oxide surface-treated commercial product available from Tayca Corporation (Japan) as Tayca MT 500 HD. Dispersing Agent A is a commercial block copolymer with pigment-affinic groups available from Byk Chemie GmbH (Wesel, Germany) as Disperbyk 184. The polyurethane grinding resin is polyurethane E as used in Table 6.

**Table 1**

| **Ingredients** | **Amount** |
|---|---|
| PU dispersion E (44 wt.-% in water) | 63.07 |
| Water | 10.81 |
| Propylene glycol n-propyl ether | 3.00 |
| Dispersing Agent A (52 wt.-% in dipropylene glycol monomethyl ether/propyleneglycol, 2/1) | 3.00 |
| Micronized titanium dioxide | 20.0 |
| Dimethylethanol amine (20 wt.-% in water) | 0.12 |
| Sum | 100.00 |

A 240 mL glass jar (72 mm diameter x 89 mm height) was charged with 175 g of a pre-mixed dispersion of the afore-mentioned ingredients (Table 1) (mixed by use of an air mixer; four-blade axial impeller). Subsequently, 350 g of 1.0 mm diameter (0.9-1.1 mm) yttrium stabilized zirconium oxide "YTZ" milling beads (available from Tosoh Corporation) were added.

In a first step the pre-mixed dispersions were shaken with the beads under cooling for 4 h to result in **Paste A 4/0** or 10 h to result in **Paste A 10/0,** the beads were filtered off after the respective time and the thus obtained dispersion was used in the following second step or directly in the coating compositions.

In a second step **Paste A 4/0** was retransferred to the cleaned glass jar and subsequently, 350 g of 0.3 mm diameter yttrium stabilized zirconium oxide "YTZ" milling beads (available from Tosoh Corporation) were added. **Paste A 4/0** was shaken under cooling with the 0.3 mm diameter beads for another 4 h to result in **Paste A 4/4;** or for another 10 h to result in **Paste A 4/10.** Afterwards, the beads were filtered off before using the pastes in the coating compositions.

The general naming of **Pastes A** is:
Paste A (number of hours shaken with 1 mm YTZ-beads in a first step)/(number of hours shaken with 0.3 mm YTZ-beads in a second step).

### Paste B

The ingredients of Paste B are shown in Table 2. The micronized titanium dioxide is a commercial product available from Tayca Corporation (Japan) as Tayca MT 500 HD (average particle size 30 µm). Dispersing Agent B is a commercial anionic dispersing and wetting agent available from Evonik (Germany) as Tego^{®} Disperse 752W. It is proposed for use in aqueous, binder-free mill bases of transparent titanium dioxide.

**Table 2**

| **Ingredients** | **Amount** |
|---|---|
| Dispersing Agent B (50 wt.-% in water) | 20.00 |
| Water | 57.50 |
| Propylene glycol n-butyl ether | 2.50 |
| Micronized titanium dioxide | 20.00 |
| Sum | 100.00 |

A 240 mL glass jar (72 mm diameter x 89 mm height) was charged with 175 g of a pre-mixed dispersion of the afore-mentioned ingredients (Table 2) (mixed by use of an air mixer; four-blade axial impeller). Subsequently, 350 g of 1.0 mm diameter (0.9-1.1 mm) yttrium stabilized zirconium oxide "YTZ" milling beads (available from Tosoh Corporation) were added.

In a first step the pre-mixed dispersions were shaken with the beads under cooling for 4 h to result in **Paste B 4/0** or 10 h to result in **Paste B 10/0,** the beads were filtered off after the respective time and the thus obtained dispersions were used in the following second step or directly in the coating compositions.

In a second step **Paste B 4/0** was retransferred to the cleaned glass jar and subsequently, 350 g of 0.3 mm diameter yttrium stabilized zirconium oxide "YTZ" milling beads (available from Tosoh Corporation) were added. **Paste B 4/0** was shaken under cooling with the 0.3 mm diameter beads for another 4 h to result in **Paste B 4/4;** or for another 6 h to result in **Paste B 4/6;** or for another 10 h to result in **Paste B 4/10.** Afterwards, the beads were filtered off before using the pastes in the coating compositions.

The general naming of **Pastes B** is:
Paste B (number of hours shaken with 1 mm YTZ-beads in a first step)/(number of hours shaken with 0.3 mm YTZ-beads in a second step).

### Characterization of the Pigment Pastes

### Particle Size Parameters

The particles size parameters of the pigment particles in Pastes A and B were determined by use of
a. a Hegman grind gauge with 0 to 50 µm scale,
b. a Malvern Zetasizer (from Malvern, S90 unit, Nanoseries Model ZEN 1690 mfg 5/2017); and
c. a Haze-guard i instrument (from Byk-Gardner GmbH, Germany, catalog number #4775),
as explained in more detail in the following.

### Hegman fineness

The drawdown was immediately investigated after applying the pastes onto a stainless-steel fineness of grind Hegman gauge and while the films were wet. The micron value at which the uniform pattern of particles begins was recorded. All Hegman fineness readings measured were 0 µm.

### Particle Size Distribution and Z-Average Particle Size

The afore-mentioned parameters were determined by use of the above Malvern Zetasizer using dynamic light scattering. To carry out the measurements, the pastes were diluted with deionized water not to exceed a photon count rate of approx. 300 to 500 counts when the unit is placed on an attenuator setting of 7. The operation temperature is held a 25 ± 1 °C and the sample size is approx. 10 to 15 mL (square glass cuvette).

The procedure was as follows:
Typically, the photon count rate is in the above range, if 0.07 g of a paste containing 20 wt.-% of the pigment is first diluted into 15.0 g of deionized water and subsequently 5 drops of this solution are again diluted in to 15.0 g of deionized water. If the pigment paste contains more or less than 20 wt.-% of the pigment, the initial amount of 0.07 g should be decreased or increased accordingly.

With such twice-diluted paste the volume-based D10, D50 and D90 values as well as the Z-average particle size were determined. Two determinations were carried out and averaged for each sample. D10 defines that the portion of particles with diameters smaller than this value is 10%. D50 defines that the portions of particles with diameters smaller this value are 50% and is also known as the median diameter. D90 defines that the portion of particles with diameters below this value is 90%.

### Haze

To measure the haze of the pastes, the pastes were diluted under agitation with deionized water to achieve a transmittance value of 50 % and 75 %, respectively. For the measurement, the above-mentioned Haze-guard i instrument was used with a glass cuvette slide by Hellma (137.067-05) with a 0.5 mm thick flow gap.

### pH Value

The pH values of Pastes A and B - before and after milling - were determined by use of an Ohaus model ST300 pH meter, calibrated with standard solutions of pH 7.0 and pH 10.0. The pH measurements were conducted at 100% of the formulations as indicated.

### Viscosity

The viscosity of Pastes A and B (in centipoise; cPs) were determined by use of a Brookfield Cap 1000+ viscosimeter using a #10 spindle. After 10 seconds on hold, the measurement was carried out for 45 seconds at a shear rate of 500 s⁻¹ at 25 °C.

In Table 3 the parameters as obtained above are summarized.

**Table 3**

| **Paste** | D10/D50/D90 (nm) | Z-average particle size (nm) | PSDS* | Haze at transmission of | | pH value | | Viscosity (cPs) |
|---|---|---|---|---|---|---|---|---|
| | | | | 50 % | 75% | premix | final | |
| **A 4/0** | 139/272/641 | 250 | 1.85 | 95.8 | 71.1 | 7.90 | 7.93 | 169 |
| **A 10/0** | 148/257/458 | 239 | 1.21 | 95.0 | 65.3 | 7.90 | 7.92 | 178 |
| **A 4/4** | 143/257/481 | 240 | 1.32 | 94.9 | 64.0 | 7.90 | 7.92 | 211 |
| **A 4/10** | 156/258/428 | 230 | 1.05 | 93.8 | 59.3 | 7.90 | 7.93 | 206 |
| **B 4/0** | 116/192/320 | 181 | 1.06 | 87.7 | 41.0 | 6.85 | 7.04 | <10 |
| **B 10/0** | 98/163/277 | 150 | 1.10 | 84.7 | 36.7 | 6.57 | 6.95 | <10 |
| **B 4/4** | 77/127/213 | 116 | 1.07 | 74.7 | 27.6 | 6.85 | 7.10 | <10 |
| **B 4/6** | 71/109/168 | 101 | 0.89 | 73.0 | 27.5 | 6.85 | 7.11 | <10 |
| **B 4/10** | 69/109/173 | 100 | 0.95 | 72.2 | 26.3 | 6.85 | 7.11 | <10 |

| | | | | | | | | |
|---|---|---|---|---|---|---|---|---|
| *PSDS: particle size distribution span | | | | | | | | |

### Preparation of Coating Compositions and Multilayer Coatings

The afore-mentioned Pastes A and B were used in basecoat compositions of two-layer coatings, the two-layer coatings comprising a basecoat layer and a clearcoat layer. Furthermore, Pastes A and B were used in midcoat compositions of three-layer coatings (i.e., tricoats), the three-layer coatings comprising a ground coat layer, a midcoat layer (basecoat layer) and a clearcoat layer.

### Preparation of Basecoat Compositions and Two-Layer Coatings

The ingredients of the basecoat compositions are shown in Table 4. The basecoat compositions are aqueous one-pack basecoat compositions, each comprising one of Pastes A or B (milled once, twice and/or for different periods, as shown in Table 3) and a metallic aluminum effect pigment (Alu Stapa IL Hydrolan 2156 (60 wt.-% Al in isopropanol) from Eckart GmbH, Germany).

The basecoat compositions were applied by ESTA bell application on steel panels (10 x 30 x 0.76 cm) that were electrocoated and pre-primed (23-30 µm) to obtain a basecoat layer having dry-layer thickness of approx. 10 to 18 µm. The basecoat was applied in two coats wet-on-wet to the desired total film build. There was a 3-5 minute-heated (63 °C) flash before coating with a clearcoat. The clear coated panel was flashed for 5 - 10 minutes and then cured at 130 °C for 25 minutes. The clearcoat was a two-component polyurethane clear coat applied by ESTA bell to a dry-layer thickness of 30 to 50 µm.

**Table 4**

| **Basecoat** | **Ingredients** | | **Amount** | | | | | | | | |
|---|---|---|---|---|---|---|---|---|---|---|---|
| | | | **CE1** | **E1** | **E2** | **E3** | **CE2** | **E4** | **E5** | **E6** | **E7** |
| Aqueous Phase | Pastes A or B | **Paste A 4/0** | 3.1 | - | - | - | - | - | - | - | - |
| | | **Paste A 10/0** | - | 3.1 | - | - | - | - | - | - | - |
| | | **Paste A 4/4** | - | - | 3.1 | - | - | - | - | - | - |
| | | **Paste A 4/10** | - | - | - | 3.1 | - | - | - | - | - |
| | | **Paste B 4/0** | - | - | - | - | 3.1 | - | - | - | - |
| | | **Paste B 10/0** | - | - | - | - | - | 3.1 | - | - | - |
| | | **Paste B 4/4** | - | - | - | - | - | - | 3.1 | - | - |
| | | **Paste B 4/6** | - | - | - | - | - | - | - | 3.1 | - |
| | | **Paste B 4/10** | - | - | - | - | - | - | - | - | 3.1 |
| | PU dispersion C (Daotan^{®} VTW 6462/36WA) | | 4.9 | 4.9 | 4.9 | 4.9 | 4.9 | 4.9 | 4.9 | 4.9 | 4.9 |
| | PU dispersion B⁴ | | 5.0 | 5.0 | 5.0 | 5.0 | 5.0 | 5.0 | 5.0 | 5.0 | 5.0 |
| | PU dispersion A³ | | 23.1 | 23.1 | 23.1 | 23.1 | 23.1 | 23.1 | 23.1 | 23.1 | 23.1 |
| | 2-Ethylhexanol | | 1.6 | 1.6 | 1.6 | 1.6 | 1.6 | 1.6 | 1.6 | 1.6 | 1.6 |
| | TMDD BG 52 (52 wt.-% in butyl glycol) | | 0.3 | 0.3 | 0.3 | 0.3 | 0.3 | 0.3 | 0.3 | 0.3 | 0.3 |
| | BYK^{®} 345 | | 0.2 | 0.2 | 0.2 | 0.2 | 0.2 | 0.2 | 0.2 | 0.2 | 0.2 |
| | Pluricol^{®} P-1010 (BASF SE) (colloidal agent) | | 0.9 | 0.9 | 0.9 | 0.9 | 0.9 | 0.9 | 0.9 | 0.9 | 0.9 |
| | Water | | 13.2 | 13.2 | 13.2 | 13.2 | 13.2 | 13.2 | 13.2 | 13.2 | 13.2 |
| | 3.5 wt.% Laponite RD +3.5 wt.% Pluricol P1010 in H₂O | | 8.9 | 8.9 | 8.9 | 8.9 | 8.9 | 8.9 | 8.9 | 8.9 | 8.9 |
| | Tripropylene glycol monomethyl ether | | 0.9 | 0.9 | 0.9 | 0.9 | 0.9 | 0.9 | 0.9 | 0.9 | 0.9 |
| | Shellsol^{™} OMS | | 0.7 | 0.7 | 0.7 | 0.7 | 0.7 | 0.7 | 0.7 | 0.7 | 0.7 |
| | DSX^{®} 1550 (20.5% in 19.5% water and 50% butyl cellosolve and 10% butyl carbitol) | | 0.6 | 0.6 | 0.6 | 0.6 | 0.6 | 0.6 | 0.6 | 0.6 | 0.6 |
| | Rheovis^{®} AS 1130 (3% in water) | | 5.8 | 5.8 | 5.8 | 5.8 | 5.8 | 5.8 | 5.8 | 5.8 | 5.8 |
| | Resimene^{®} HM 2608 (melamine crosslinker) | | 5.8 | 5.8 | 5.8 | 5.8 | 5.8 | 5.8 | 5.8 | 5.8 | 5.8 |
| | N,N-dimethylethanolamine | | 0.1 | 0.1 | 0.1 | 0.1 | 0.1 | 0.1 | 0.1 | 0.1 | 0.1 |
| Organic Phase | Alu Stapa IL Hydrolan 2156 (60 wt.-% Al in i-propanol) | | 4.3 | 4.3 | 4.3 | 4.3 | 4.3 | 4.3 | 4.3 | 4.3 | 4.3 |
| | Butyl glycol | | 5.8 | 5.8 | 5.8 | 5.8 | 5.8 | 5.8 | 5.8 | 5.8 | 5.8 |
| | Polyester (Example D, DE4009858A1, col. 16, I. 37-59) | | 2.5 | 2.5 | 2.5 | 2.5 | 2.5 | 2.5 | 2.5 | 2.5 | 2.5 |
| | N,N-dimethylethanolamine (20 wt.-% in water) | | 0.3 | 0.3 | 0.3 | 0.3 | 0.3 | 0.3 | 0.3 | 0.3 | 0.3 |
| Adjustment | N,N-dimethylethanolamine | | 0.1 | 0.1 | 0.1 | 0.1 | 0.1 | 0.1 | 0.1 | 0.1 | 0.1 |
| | water | | 11.9 | 11.9 | 11.9 | 11.9 | 11.9 | 11.9 | 11.9 | 11.9 | 11.9 |
| Sum | | | 100.0 | 100.0 | 100.0 | 100.0 | 100.0 | 100.0 | 100.0 | 100.0 | 100.0 |

### Preparation of Midcoat Compositions, Ground coat Composition and Three-Layer Coatings

The ingredients of the midcoat compositions (i.e., basecoat compositions in a three-layer coating) are shown in Table 5. The midcoat compositions are aqueous one-pack midcoat compositions as shown in Table 5, each comprising one of Pastes A or B and a titanium dioxide coated mica effect pigment (Automotive Rutile Micro White A-901-F OPB from CQV).

The ingredients of the ground coat composition are shown in Table 7. The ground coat composition is an aqueous one-pack ground coat composition comprising coloring pigment dispersions as shown in Table 6.

The ground coat composition was applied on applied by ESTA bell application on steel panels (10 x 30 x 0.76 cm) that were pre-coated with an electrocoat and a prebaked solvent-borne white primer (25-33 µm) to form a ground coat layer having dry-layer thickness of approx. 10 to 25 µm.

On top of the ground coat layer, after a 1 to 3-minute flash, a midcoat composition was applied wet-on-wet by ESTA bell application to form a midcoat (i.e., basecoat) layer having dry-layer thickness of approx. 6 to 8 µm.

There was a 3 to 5-minute heated (63 °C) flash before wet-on-wet coating the midcoat with a clearcoat. The clear coated panel was flashed for 5 to10 minutes and then cured at 130 °C for 25 minutes. The clearcoat was a two-component polyurethane clear coat applied by ESTA bell to a dry-layer thickness of 30 to 50 µm.

**Table 5**

| **Midcoat** | **Ingredients** | | **Amount** | | | | | | |
|---|---|---|---|---|---|---|---|---|---|
| | | | **CE3** | **E8** | **E9** | **CE4** | **E10** | **E11** | **E12** |
| Aqueous Phase | Pastes A or B | **Paste A 4/0** | 1.8 | - | - | - | - | - | - |
| | | **Paste A 4/4** | - | 1.8 | - | - | - | - | - |
| | | **Paste A 4/10** | - | - | 1.8 | - | - | - | - |
| | | **Paste B 4/0** | - | - | - | 1.8 | - | - | - |
| | | **Paste B 4/4** | - | - | - | - | 1.8 | - | - |
| | | **Paste B 4/6** | - | - | - | - | - | 1.8 | - |
| | | **Paste B 4/10** | - | - | - | - | - | - | 1.8 |
| | PU dispersion C (Daotan^{®} VTW 6462/36WA) | | 8.3 | 8.3 | 8.3 | 8.3 | 8.3 | 8.3 | 8.3 |
| | PU dispersion B (35.5 wt.% PU, 8.5 wt.% butyl glycol, 56 wt.% H₂O) | | 5.7 | 5.7 | 5.7 | 5.7 | 5.7 | 5.7 | 5.7 |
| | PU dispersion A (27 wt.% PU solids, 4 wt.% ketone, 4 wt.% Pluricol P1010, 65 wt.% H₂O) | | 24.2 | 24.2 | 24.2 | 24.2 | 24.2 | 24.2 | 24.2 |
| | 2-Ethylhexanol | | 1.0 | 1.0 | 1.0 | 1.0 | 1.0 | 1.0 | 1.0 |
| | TMDD BG 52 (52 wt.-% in butyl glycol) | | 0.4 | 0.4 | 0.4 | 0.4 | 0.4 | 0.4 | 0.4 |
| | BYK 345 | | 0.2 | 0.2 | 0.2 | 0.2 | 0.2 | 0.2 | 0.2 |
| | N-methyl pyrrolidone | | 2.0 | 2.0 | 2.0 | 2.0 | 2.0 | 2.0 | 2.0 |
| | Water | | 9.6 | 9.6 | 9.6 | 9.6 | 9.6 | 9.6 | 9.6 |
| | 3.5 wt.% Laponite RD + 3.5 wt.% Pluricol P1010 in H₂O (thickener) | | 10.2 | 10.2 | 10.2 | 10.2 | 10.2 | 10.2 | 10.2 |
| | Shellsol^{™} OMS | | 1.0 | 1.0 | 1.0 | 1.0 | 1.0 | 1.0 | 1.0 |
| | DSX^{®} 1550 (20.5% in 19.5% water and 50% butyl cellosolve and 10% butyl carbitol) | | 0.8 | 0.8 | 0.8 | 0.8 | 0.8 | 0.8 | 0.8 |
| | Rheovis^{®} AS 1130 (3% in water) | | 8.2 | 8.2 | 8.2 | 8.2 | 8.2 | 8.2 | 8.2 |
| | Resimene^{®} HM 2608 (melamine crosslinker) | | 6.6 | 6.6 | 6.6 | 6.6 | 6.6 | 6.6 | 6.6 |
| | N,N-dimethylethanolamine | | 0.2 | 0.2 | 0.2 | 0.2 | 0.2 | 0.2 | 0.2 |
| Organic Phase | Automotive Rutile Micro White A-901-F OPB | | 2.4 | 2.4 | 2.4 | 2.4 | 2.4 | 2.4 | 2.4 |
| | Butyl glycol | | 5.7 | 5.7 | 5.7 | 5.7 | 5.7 | 5.7 | 5.7 |
| | Polyester (Example D, DE 4009858 A1, col. 16, I. 37-59) | | 2.7 | 2.7 | 2.7 | 2.7 | 2.7 | 2.7 | 2.7 |
| | N,N-dimethylethanolamine (20 wt.-% in water) | | 0.2 | 0.2 | 0.2 | 0.2 | 0.2 | 0.2 | 0.2 |
| Adjustment | N,N-dimethylethanolamine | | 0.1 | 0.1 | 0.1 | 0.1 | 0.1 | 0.1 | 0.1 |
| | water | | 8.7 | 8.7 | 8.7 | 8.7 | 8.7 | 8.7 | 8.7 |
| I Sum | | | 100.0 | 100.0 | 100.0 | 100.0 | 100.0 | 100.0 | 100.0 |

**Table 6**

| **Ingredients** | **Pigment dispersions** | | | |
|---|---|---|---|---|
| | **P1** | **P2** | **P3** | **P4** |
| TiPure R706 (titanium dioxide) | 69.0 | - | - | - |
| Monarch 900 (carbon black) | - | 14.0 | - | - |
| Bayferrox 130BM (iron oxide) | - | - | 48.0 | - |
| Heucodur 500 (inorganic blue) | - | - | - | 33.0 |
| Acrylic Resin A (35.5 wt% solids, 29 wt.% propylene glycol propyl ether, 29 wt.% H₂O, 6.5 wt.% ketone) | 6.2 | - | - | - |
| Acrylic Resin B (35.5 wt% solids, 29 wt.% propylene glycol propyl ether, 29 wt.% H₂O, 6.5 wt.% ketone) | - | 30.3 | - | - |
| PU dispersion E (44 wt.% PU solids, 56 wt.% H₂O) | - | 3.4 | 39.2 | 47.0 |
| N,N-dimethylethanolamine | - | 0.1 | 0.1 | - |
| Water | 23.6 | 46.5 | 7.9 | 12.7 |
| Propylene glycol ether | 1.2 | 1.7 | - | - |
| Agitan 281 | - | - | - | 0.3 |
| Disperbyk 184 | - | - | - | 4.0 |
| Pluricol^{®} P-1010 (BASF SE) (colloidal agent) | - | 4.0 | 4.8 | 3.0 |
| Sum | 100.0 | 100.0 | 100.0 | 100.0 |

**Table 7**

| **Ground coat** | **Ingredients** | **Amount** |
|---|---|---|
| Aqueous Phase | Titanium dioxide dispersion **P1** | 28.3 |
| | Carbon black dispersion **P2** | 0.1 |
| | Iron oxide dispersion **P3** | 0.1 |
| | Inorganic blue dispersion **P4** | 0.2 |
| | PU dispersion D (40.5 wt.% PU in 38 wt.% H₂O 7 wt.% ketone, 3 wt.% propylene glycol ether, 11.5wt.% dipropylene glocol ether) | 14.4 |
| | PU dispersion C (Daotan^{®} VTW 6462/36WA) | 2.3 |
| | PU dispersion B (35.5 wt.% PU solids, 8.5 wt.% butyl glycol, 56 wt.% H₂O) | 2.4 |
| | PU dispersion A (27 wt. % PU solids, 4 wt.% ketone, 4 wt.% Pluricol P1010, 65 wt.% H₂O) | 9.0 |
| | 2-Ethylhexanol | 1.7 |
| | BYK 345 | 0.3 |
| | Water | 7.7 |
| | 3.5 wt.% Laponite RD +3.5 wt.% Pluricol P1010 in H₂O | 11.6 |
| | Tripropylene glycol monomethyl ether | 1.8 |
| | Dipropylene glycol propyl ether | 3.1 |
| | Butyl glycol | 2.6 |
| | Tributyl | 0.9 |
| | Shellsol^{™} OMS | 0.9 |
| | Resimene^{®} HM 2608 (melamine crosslinker) | 6.3 |
| Adjustment | N,N-dimethylethanolamine | 0.1 |
| | water | 6.2 |
| I Sum | | 100.0 |

### Results

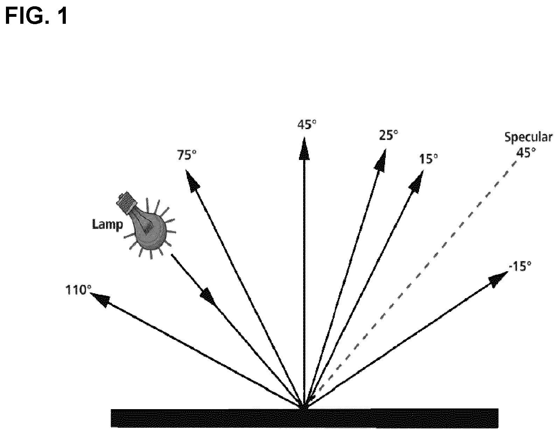

The color data of the two-layer coatings and three-layer coatings were determined by use of a Byk Mac i instrument (from Byk Gardner GmbH, Germany). The illumination was a D65 illumination (observer angle 10°). The multi-angle (-15°, 15°, 25°, 45°, 75°, 110°) measurement geometry is shown in FIG. 1. The angle of 110° is also denoted as "flop angle".

By use of the afore-mentioned instrument the L*, a* and b* values of the two-layer coatings and the three-layer coatings were determined. C* is calculated by use of the following equation: C* = (a² + b²)^{0.5} and h = arctan (b/a).

The CIELAB formula defines a color space that is characterized by an a*-axis, that goes from green to red, and by a b*-axis, extending from blue to yellow, as well as a lightness axis L*, that is perpendicular to the other two. Negative values of b* mean that the color is bluish, while positive values of b* stand for a more yellowish color. High values for L* (i.e., lightness) stand for lighter colors, while low values of L* stand for darker colors.

In the following the respective color values as well as the difference of these values in the color space ΔL*, Δa* and Δb* are shown for the two-layer coatings containing Pastes A and B, respectively, in the basecoat layer; and for the three-layer coatings containing Pastes A and B, respectively, in the midcoat layer and in the latter case other coloring pigments in the ground coat layer.

### Two-Layer Coatings with Paste A in the Basecoat

In Tables 8-1 and 8-2 two two-coat layer coatings are compared, the first one (CE1) making use of a basecoat layer containing Paste A, which was just milled once for 4 hours with 1 mm YTZ^{®} beads in the presence of a grinding resin and a dispersing additive (details see above), and a second one (E1), wherein Paste A was treated the same way, but for 10 hours (see above).

**Table 8-1**

| **Basecoat** (Paste) | **Off-Specular (°)** | **L*** | **a*** | **b*** | **C*** | **h** |
|---|---|---|---|---|---|---|
| **CE1** (A 4/0) | **-15** | 118.74 | 0.34 | 12.77 | 12.77 | 88.50 |
| | **+15** | 114.02 | 0.34 | 11.40 | 11.41 | 88.30 |
| | **+25** | 97.52 | 0.00 | 7.30 | 7.30 | 89.98 |
| | **+45** | 68.75 | -0.78 | -1.07 | 1.33 | 234.01 |
| | **+75** | 50.48 | -0.95 | -7.22 | 7.28 | 262.50 |
| | **+110** | 44.26 | -1.05 | -8.87 | 8.93 | 263.24 |
| **E1** (A 10/0) | **-15** | 119.37 | 0.40 | 13.33 | 13.34 | 88.27 |
| | **+15** | 113.99 | 0.41 | 11.80 | 11.81 | 88.03 |
| | **+25** | 97.33 | 0.05 | 7.52 | 7.52 | 89.62 |
| | **+45** | 68.61 | -0.75 | -1.18 | 1.40 | 237.72 |
| | **+75** | 50.53 | -0.90 | -7.50 | 7.55 | 263.16 |
| | **+110** | 44.38 | -1.00 | -9.18 | 9.23 | 263.80 |

In the near off-specular range (-15° to +15°) there is a pronounced yellow tint for both two-layer coatings, since the b* values are high. In the far off-specular range (+75° and 110°) the b* values for both two-layer coating are relatively high and negative, thus standing for a pronounced bluish tint.

**Table 8-2**

| **Basecoat** (Paste) | **Off-Specular (°)** | **ΔL*** | **Δa*** | **Δb*** |
|---|---|---|---|---|
| Δ [**E1** (A 10/0) - **CE1** (A 4/0)] | **-15** | 0.63 | 0.06 | 0.56 |
| | **+15** | -0.03 | 0.07 | 0.40 |
| | **+25** | -0.19 | 0.05 | 0.22 |
| | **+45** | -0.14 | 0.03 | -0.11 |
| | **+75** | 0.05 | 0.05 | -0.28 |
| | **+110** | 0.12 | 0.05 | -0.31 |

The differences (Δ) in the color values particularly in Δb* show that even after a longer milling time of 10 hours compared to 4 hours no reduction of the yellow tint in the near off-specular range was achieved. Without wanting to be bound by theory, the inventors believe that the Z-average particle size of the titanium dioxide particles in both Pastes A (as employed herein-above in the basecoats) as well as the particle size distribution span of these titanium dioxide particles are too high.

In Tables 9-1 and 9-2 three two-coat layer coatings are compared, the first one (CE1) making use of a basecoat layer containing Paste A, which was just milled once for 4 hours with 1 mm YTZ^{®} beads without use of a grinding resin, but making use of a dispersing additive (details see above); a second one (E2), wherein Paste A was treated the same way, but followed by a second 4-hour milling step with 0.3 mm YTZ^{®} beads (see above); and a third one (E3), wherein Paste A was treated the same way as Paste A as used in E2, but wherein the second milling step was carried out for 10 hours. It is to be noticed that the color values for CE1 in Tables 8-1 and 9-1 differ, although they use the identical Paste A in an identical coating composition. This is because the samples prepared in Tables 8-1 and 9-1 belong to different test series prepared on different days in different spraying booth under slightly different conditions. Thus, here and in all following tables of the specification a comparison of color values is only carried out within the same test series.

**Table 9-1**

| **Basecoat** (Paste) | **Off-Specular (°)** | **L*** | **a*** | **b*** | **C*** | **h** |
|---|---|---|---|---|---|---|
| **CE1** (A 4/0) | **-15** | 122.82 | 0.11 | 13.66 | 13.66 | 89.53 |
| | **+15** | 116.24 | 0.09 | 12.05 | 12.05 | 89.58 |
| | **+25** | 96.90 | -0.29 | 7.60 | 7.61 | 92.18 |
| | **+45** | 66.51 | -1.10 | -0.80 | 1.36 | 216.13 |
| | **+75** | 49.48 | -1.32 | -6.11 | 6.25 | 257.84 |
| | **+110** | 43.77 | -1.46 | -7.36 | 7.50 | 258.81 |
| **E2** (A 4/4) | **-15** | 123.28 | 0.09 | 13.80 | 13.81 | 89.62 |
| | **+15** | 116.65 | 0.06 | 12.30 | 12.30 | 89.71 |
| | **+25** | 97.24 | -0.28 | 7.75 | 7.75 | 92.07 |
| | **+45** | 66.51 | -1.07 | -0.88 | 1.38 | 219.47 |
| | **+75** | 49.43 | -1.28 | -6.32 | 6.45 | 258.53 |
| | **+110** | 43.84 | -1.44 | -7.51 | 7.65 | 259.18 |
| **E3** (A 4/10) | **-15** | 124.02 | 0.15 | 13.35 | 13.35 | 89.35 |
| | **+15** | 117.33 | 0.15 | 12.00 | 12.00 | 89.26 |
| | **+25** | 97.55 | -0.16 | 7.44 | 7.44 | 91.23 |
| | **+45** | 66.51 | -0.87 | -1.10 | 1.40 | 231.52 |
| | **+75** | 49.20 | -1.08 | -6.76 | 6.84 | 260.95 |
| | **+110** | 43.64 | -1.21 | -8.02 | 8.11 | 261.40 |

In the near off-specular range (-15° to +15°) there is a pronounced yellow tint for all three two-layer coatings, since the b* values are high. In the far off-specular range (+75° and 110°) the b* values for both two-layer coating are relatively high and negative, thus standing for a pronounced bluish tint.

**Table 9-2**

| **Basecoat** (Paste) | **Off-Specular (°)** | **ΔL*** | **Δa*** | **Δb*** |
|---|---|---|---|---|
| Δ [**E2** (A 4/4) - **CE1** (A 4/0)] | **-15** | 0.46 | -0.02 | 0.14 |
| | **+15** | 0.41 | -0.03 | 0.25 |
| | **+25** | 0.34 | 0.01 | 0.15 |
| | **+45** | 0.00 | 0.03 | -0.08 |
| | **+75** | -0.05 | 0.04 | -0.21 |
| | **+110** | 0.07 | 0.02 | -0.15 |
| Δ [**E3** (A 4/10) - **CE1** (A 4/0)] | **-15** | 1.20 | 0.04 | -0.31 |
| | **+15** | 1.09 | 0.06 | -0.05 |
| | **+25** | 0.65 | 0.13 | -0.16 |
| | **+45** | 0.00 | 0.23 | -0.30 |
| | **+75** | -0.28 | 0.24 | -0.65 |
| | **+110** | -0.13 | 0.25 | -0.66 |

The differences (Δ) in the color values particularly in Δb* show that even after carrying out a second milling step with Paste A for 4 hours using 0.3 mm YTZ^{®} beads does not lead to a reduction of the yellow tint in the near off-specular range. Only after a second milling period of Paste A for 10 hours with 0.3 mm YTZ^{®} beads a shift to a slightly lower yellow tint was observed in the near off-specular range (-15° and +15°).

In summary, most of the basecoat compositions making use of Pastes A, milled once or twice with differently sized YTZ^{®} beads (1 mm and 0.3 mm, respectively) for different periods of time do not reduce the yellow tint in the near off-specular range. However, milling in a second stage for 10 hours with 0.3 mm YTZ^{®} beads at least slightly reduces the yellow tint, which is believed to be due to the reduction of the Z-average particle size to 230 nm, compared to an only 4-hour one-stage milling process with 1 mm YTZ^{®} beads (Z-average particle size to 250 nm) and a reduced particle size distribution span.

### Two-Layer Coatings with Paste B in the Basecoat

In Tables 10-1 and 10-2 two two-coat layer coatings are compared, the first one (CE2) making use of a basecoat layer containing Paste B, which was just milled once for 4 hours with 1 mm YTZ^{®} beads using no grinding resin, but a dispersing additive (details see above), and a second one (E1), wherein Paste B was treated the same way, but for 10 hours (see above).

**Table 10-1**

| **Basecoat** (Paste) | **Off-Specular (°)** | **L*** | **a*** | **b*** | **C*** | **h** |
|---|---|---|---|---|---|---|
| **CE2** (B 4/0) | **-15** | 114.99 | 0.02 | 12.24 | 12.24 | 89.90 |
| | **+15** | 111.77 | 0.18 | 11.59 | 11.59 | 89.09 |
| | **+25** | 96.85 | -0.04 | 7.92 | 7.92 | 90.30 |
| | **+45** | 69.80 | -0.68 | -0.43 | 0.81 | 212.38 |
| | **+75** | 52.39 | -0.89 | -7.31 | 7.36 | 263.08 |
| | **+110** | 46.37 | -1.08 | -9.15 | 9.21 | 263.25 |
| **E2** (B 10/0) | **-15** | 117.58 | -0.45 | 10.43 | 10.44 | 92.46 |
| | **+15** | 114.44 | -0.22 | 10.03 | 10.03 | 91.28 |
| | **+25** | 98.65 | -0.35 | 6.81 | 6.81 | 92.91 |
| | **+45** | 69.69 | -0.70 | -0.41 | 0.81 | 210.19 |
| | **+75** | 51.10 | -0.69 | -6.63 | 6.66 | 264.08 |
| | **+110** | 44.93 | -0.92 | -8.63 | 8.68 | 263.93 |

In the near off-specular range (-15° to +15°) there is some yellow tint particularly for two-layer coating CE2, since the b* values are relatively high. A less pronounced, yellow tint is found for the near off-specular range of the two-layer coating E2. In the far off-specular range (+75° and 110°) the b* values for both two-layer coating are relatively high and negative, thus standing for a pronounced bluish tint.

**Table 10-2**

| **Basecoat** (Paste) | **Off-Specular (°)** | **ΔL*** | **Δa*** | **Δb*** |
|---|---|---|---|---|
| Δ [**E2** (B 10/0) - **CE2** (B 4/0)] | **-15** | 2.59 | -0.47 | -1.81 |
| | **+15** | 2.67 | -0.40 | -1.56 |
| | **+25** | 1.80 | -0.31 | -1.11 |
| | **+45** | -0.11 | -0.02 | 0.02 |
| | **+75** | -1.29 | 0.20 | 0.68 |
| | **+110** | -1.44 | 0.16 | 0.52 |

The differences (Δ) in the color values particularly in Δb* show that the longer milling time of 10 hours compared to 4 hours in the absence of a grinding resin significantly reduces the yellow tint in the near off-specular range, but still allowing a desired pronounced bluish tint in the far off-specular range.

In summary, the basecoat compositions making use of Paste B, milled once with YTZ^{®} beads (1 mm) for 10 hours is apt to significantly reduce the yellow tint in the near off-specular range compared to an only 4-hour one-stage milling process with 1 mm YTZ^{®} beads. It is believed that this is due to the reduction of the Z-average particle size from 181 nm (4-hour milling with 1 mm YTZ^{®} beads) to 150 nm (10-hour milling with 1 mm YTZ^{®} beads) and a reduced particle size distribution span.

In the following Tables 11-1 and 11-2 four two-coat layer coatings are compared, the first one (CE2) making use of a basecoat layer containing Paste B, which was just milled once for 4 hours with 1 mm YTZ^{®} beads in the absence of a grinding resin, but in the presence of a dispersing additive (details see above); a second one (E5), wherein Paste B was treated the same way, but followed by a second 4-hour milling step with 0.3 mm YTZ^{®} beads (see above); a third one (E6), wherein Paste B was treated the same way as Paste B as used in E5, but wherein the second milling step was carried out for 6 hours; and a fourth one (E7), wherein Paste B was treated the same way as Paste B as used in E5, but wherein the second milling step was carried out for 10 hours.

**Table 11-1**

| **Basecoat** (Paste) | **Off-Specular (°)** | **L*** | **a*** | **b*** | **C*** | **h** |
|---|---|---|---|---|---|---|
| **CE2** (B 4/0) | **-15** | 120.12 | 0.01 | 13.14 | 13.14 | 89.97 |
| | **+15** | 115.88 | 0.11 | 12.77 | 12.77 | 89.51 |
| | **+25** | 97.90 | -0.20 | 8.30 | 8.30 | 91.39 |
| | **+45** | 68.16 | -0.92 | -0.64 | 1.12 | 214.57 |
| | **+75** | 51.66 | -1.16 | -6.72 | 6.82 | 260.20 |
| | **+110** | 46.07 | -1.38 | -8.27 | 8.39 | 260.50 |
| **E5** (B 4/4) | **-15** | 125.77 | -0.84 | 9.67 | 9.71 | 94.94 |
| | **+15** | 121.45 | -0.68 | 9.26 | 9.28 | 94.20 |
| | **+25** | 101.47 | -0.72 | 5.89 | 5.93 | 96.94 |
| | **+45** | 67.92 | -0.88 | -0.52 | 1.02 | 210.70 |
| | **+75** | 48.89 | -0.79 | -5.68 | 5.74 | 262.05 |
| | **+110** | 43.00 | -1.02 | -7.58 | 7.65 | 262.31 |
| **E6** (B 4/6) | **-15** | 125.88 | -0.87 | 8.77 | 8,81 | 95.64 |
| | **+15** | 121.48 | -0.74 | 8.49 | 8.52 | 95.00 |
| | **+25** | 101.64 | -0.76 | 5.40 | 5.46 | 98.01 |
| | **+45** | 68.10 | -0.88 | -0.43 | 0.98 | 206.19 |
| | **+75** | 48.70 | -0.75 | -5.30 | 5.35 | 261.95 |
| | **+110** | 42.55 | -0.95 | -7.27 | 7.33 | 262.57 |
| **E7** (B 4/10) | **-15** | 126.45 | -0.96 | 8.13 | 8.18 | 96.71 |
| | **+15** | 122.22 | -0.81 | 7.77 | 7.81 | 95.95 |
| | **+25** | 102.05 | -0.83 | 4.86 | 4.93 | 99.64 |
| | **+45** | 68.17 | -0.94 | -0.40 | 1.02 | 202.96 |
| | **+75** | 48.45 | -0.82 | -4.67 | 4.74 | 259.99 |
| | **+110** | 42.10 | -1.02 | -6.47 | 6.55 | 261.07 |

In the near off-specular range (-15° to +15°) there is a yellow tint particularly for two-layer coating CE2, since the b* value is high. A decreasing yellow tint in the order of two-layer coatings from E5, E6 to E7 is found for the near off-specular range. In the far off-specular range (+75° and +110°) the b* values for all two-layer coatings are relatively high and negative, thus standing for a desired pronounced bluish tint.

**Table 11-2**

| **Basecoat** (Paste) | **Off-Specular (°)** | **ΔL*** | **Δa*** | **Δb*** |
|---|---|---|---|---|
| Δ [**E5** (B 4/4) - **CE2** (B 4/0)] | **-15** | 5.65 | -0.85 | -3.47 |
| | **+15** | 5.57 | -0.79 | -3.51 |
| | **+25** | 3.57 | -0.52 | -2.41 |
| | **+45** | -0.24 | 0.04 | 0.12 |
| | **+75** | -2.77 | 0.37 | 1.04 |
| | **+110** | -3.07 | 0.36 | 0.69 |
| Δ [**E6** (B 4/6) - **CE2** (B 4/0)] | **-15** | 5.76 | -0.88 | -4.37 |
| | **+15** | 5.60 | -0.85 | -4.28 |
| | **+25** | 3.74 | -0.56 | -2.90 |
| | **+45** | -0.06 | 0.04 | 0.21 |
| | **+75** | -2.96 | 0.41 | 1.42 |
| | **+110** | -3.52 | 0.43 | 1.00 |
| Δ [**E7** (B 4/10) - **CE2** (B 4/0)] | **-15** | 6.33 | -0.97 | -5.01 |
| | **+15** | 6.34 | -0.92 | -5.00 |
| | **+25** | 4.15 | -0.63 | -3.44 |
| | **+45** | 0.01 | -0.02 | 0.24 |
| | **+75** | -3.21 | 0.34 | 2.05 |
| | **+110** | -3.97 | 0.36 | 1.80 |

The differences (Δ) in the color values particularly in Δb* show that after carrying out a second milling step with Paste B for 4 hours using 0.3 mm YTZ^{®} beads, a significant reduction of the yellow tint in the near off-specular range occurs. If the second milling step with Paste B using 0.3 mm YTZ^{®} beads is extended to 6 or even 10 hours, the Δb* show even better that the yellow tint in the near off-specular range is much less pronounced and that there is a good bluish tint in the far off-specular range.

In summary, all of the basecoat compositions making use of Pastes B, milled twice with differently sized YTZ^{®} beads (first stage: 1 mm; and second stage 0.3 mm) for different periods of time are apt to reduce the yellow tint in the near off-specular range. The longer the second milling step with 0.3 mm YTZ^{®} beads was (4, 6 and 10 hours), the more pronounced was the reduction of the yellow tint in the near off-specular range. This is believed to be due to the reduction of the Z-average particle size in the range from 116 nm to 100 nm, compared to an only 4-hour one-stage milling process with 1 mm YTZ^{®} beads (Z-average particle size: 181 nm) and a reduced particle size distribution span.

### Three-Layer Coatings with Paste A in the Midcoat

In Tables 12-1 and 12-2 three three-layer coatings are compared, the first one (CE3) making use of a midcoat layer containing Paste A, which was just milled once for 4 hours with 1 mm YTZ^{®} beads using a grinding resin and a dispersing additive (details see above); a second one (E8), wherein Paste A was treated the same way, but followed by a second 4-hour milling step with 0.3 mm YTZ^{®} beads (see above); and a third one (E9), wherein Paste A was treated the same way as Paste A as used in E8, but wherein the second milling step was carried out for 10 hours.

**Table 12-1**

| **Midcoat** (Paste) | **Off-Specular (°)** | **L*** | **a*** | **b*** | **C*** | **h** |
|---|---|---|---|---|---|---|
| **CE3** (A 4/0) | **-15** | 94.55 | -1.59 | 1.16 | 1.97 | 144.01 |
| | **+15** | 94.04 | -1.05 | 1.37 | 1.73 | 127.61 |
| | **+25** | 90.97 | -0.68 | 0.84 | 1.08 | 129.04 |
| | **+45** | 86.37 | -0.16 | 0.19 | 0.25 | 130.09 |
| | **+75** | 84.38 | 0.22 | -0.23 | 0.32 | 313.38 |
| | **+110** | 81.72 | 0.24 | -0.03 | 0.24 | 352.70 |
| **E8** (A 4/4) | **-15** | 94.74 | -1.69 | 2.06 | 2.66 | 129.31 |
| | **+15** | 94.21 | -1.18 | 2.22 | 2.51 | 118.07 |
| | **+25** | 91.14 | -0.87 | 1.63 | 1.85 | 117.98 |
| | **+45** | 86.44 | -0.40 | 0.64 | 0.76 | 122.28 |
| | **+75** | 84.03 | -0.04 | 0.06 | 0.07 | 126.23 |
| | **+110** | 81.30 | 0.00 | 0.29 | 0.29 | 89.90 |
| **E9** (A 4/10) | **-15** | 94.33 | -1.53 | 1.87 | 2.42 | 129.15 |
| | **+15** | 93.93 | -1.03 | 2.01 | 2.26 | 117.23 |
| | **+25** | 91.13 | -0.72 | 1.39 | 1.57 | 117.40 |
| | **+45** | 86.33 | -0.27 | 0.32 | 0.43 | 130.22 |
| | **+75** | 83.79 | 0.09 | -0.31 | 0.32 | 286.78 |
| | **+110** | 80.91 | 0.15 | -0.09 | 0.18 | 328.02 |

**Table 12-2**

| **Midcoat** (Paste) | **Off-Specular (°)** | **ΔL*** | **Δa*** | **Δb*** |
|---|---|---|---|---|
| Δ **[E8** (A 4/4) - **CE3** (A 4/0)] | **-15** | 0.19 | -0.10 | 0.90 |
| | **+15** | 0.17 | -0.13 | 0.85 |
| | **+25** | 0.17 | -0.19 | 0.79 |
| | **+45** | 0.07 | -0.24 | 0.45 |
| | **+75** | -0.35 | -0.26 | 0.29 |
| | **+110** | -0.42 | -0.24 | 0.32 |
| Δ **[E9** (A 4/10) - **CE3** (A 4/0)] | **-15** | -0.22 | 0.06 | 0.71 |
| | **+15** | -0.11 | 0.02 | 0.64 |
| | **+25** | 0.16 | -0.04 | 0.55 |
| | **+45** | -0.04 | -0.11 | 0.13 |
| | **+75** | -0.59 | -0.13 | -0.08 |
| | **+110** | -0.81 | -0.09 | -0.06 |

The differences (Δ) in the color values particularly in Δb* show that even after carrying out a second milling step with Paste A for 4 or 10 hours using 0.3 mm YTZ^{®} beads does not lead to a reduction of the yellow tint in the near off-specular range.

### Three-Layer Coatings with Paste B in the Midcoat

In Tables 13-1 and 13-2 four three-layer coatings are compared, the first one (CE4) making use of a midcoat layer containing Paste B, which was just milled once for 4 hours with 1 mm YTZ^{®} beads without using a grinding resin, but using a dispersing additive (details see above); a second one (E10), wherein Paste B was treated the same way, but followed by a second 4-hour milling step with 0.3 mm YTZ^{®} beads (see above); a third one (E11), wherein Paste B was treated the same way as Paste B as used in E10, but wherein the second milling step was carried out for 6 hours; and a fourth one (E12) wherein Paste B was treated the same way as Paste B as used in E10, but wherein the second milling step was carried out for 10 hours.

**Table 13-1**

| **Midcoat** (Paste) | **Off-Specular (°)** | **L*** | **a*** | **b*** | **C*** | **h** |
|---|---|---|---|---|---|---|
| **CE4** (B 4/0) | **-15** | 94.53 | -1.56 | 1.85 | 2.42 | 130.18 |
| | **+15** | 94.20 | -1.06 | 2.01 | 2.27 | 117.85 |
| | **+25** | 91.34 | -0.77 | 1.39 | 1.59 | 119.15 |
| | **+45** | 86.50 | -0.31 | 0.29 | 0.42 | 136.41 |
| | **+75** | 83.94 | 0.06 | -0.42 | 0.42 | 278.74 |
| | **+110** | 81.04 | 0.12 | -0.24 | 0.27 | 296.99 |
| **E10** (B 4/4) | **-15** | 96.41 | -1.76 | 1.26 | 2.16 | 144.41 |
| | **+15** | 95.66 | -1.21 | 1.62 | 2.02 | 126.68 |
| | **+25** | 92.07 | -0.83 | 1.13 | 1.41 | 126.31 |
| | **+45** | 86.42 | -0.25 | 0.36 | 0.44 | 125.24 |
| | **+75** | 83.64 | 0.20 | -0.30 | 0.36 | 304.22 |
| | **+110** | 80.96 | 0.22 | -0.12 | 0.25 | 332.56 |
| **E11** (B 4/6) | **-15** | 95.82 | -1.71 | 0.97 | 1.97 | 150.35 |
| | **+15** | 95.14 | -1.13 | 1.29 | 1.72 | 131.28 |
| | **+25** | 91.75 | -0.73 | 0.87 | 1.14 | 130.06 |
| | **+45** | 86.45 | -0.16 | 0.35 | 0.39 | 114.18 |
| | **+75** | 84.02 | 0.29 | -0.20 | 0.35 | 325.95 |
| | **+110** | 81.33 | 0.32 | -0.05 | 0.32 | 350.19 |
| **E12** (B 4/10) | **-15** | 97.07 | -1.75 | 0.96 | 1.99 | 151.22 |
| | **+15** | 96.10 | -1.20 | 1.43 | 1.87 | 129.95 |
| | **+25** | 92.21 | -0.78 | 1.07 | 1.33 | 125.85 |
| | **+45** | 86.53 | -0.19 | 0.52 | 0.56 | 110.35 |
| | **+75** | 83.85 | 0.28 | -0.06 | 0.29 | 348.26 |
| | **+110** | 81.18 | 0.31 | 0.10 | 0.32 | 18.32 |

**Table 13-2**

| **Basecoat** (Paste) | **Off-Specular (°)** | **ΔL*** | **Δa*** | **Δb*** |
|---|---|---|---|---|
| Δ **[E10** (B 4/4) - **CE4** (B 4/0)] | **-15** | 1.88 | -0.20 | -0.59 |
| | **+15** | 1.46 | -0.15 | -0.39 |
| | **+25** | 0.73 | -0.06 | -0.26 |
| | **+45** | -0.08 | 0.06 | 0.07 |
| | **+75** | -0.30 | 0.14 | 0.12 |
| | **+110** | -0.08 | 0.10 | 0.12 |
| Δ **[E11** (B 4/6) - **CE4** (B 4/0)] | **-15** | 1.29 | -0.15 | -0.88 |
| | **+15** | 0.94 | -0.07 | -0.72 |
| | **+25** | 0.41 | 0.04 | -0.52 |
| | **+45** | -0.05 | 0.15 | 0.06 |
| | **+75** | 0.08 | 0.23 | 0.22 |
| | **+110** | 0.29 | 0.20 | 0.19 |
| Δ **[E12** (B 4/10) - **CE4** (B 4/0)] | **-15** | 2.54 | -0.19 | -0.89 |
| | **+15** | 1.90 | -0.14 | -0.58 |
| | **+25** | 0.87 | -0.01 | -0.32 |
| | **+45** | 0.03 | 0.12 | 0.23 |
| | **+75** | -0.09 | 0.22 | 0.36 |
| | **+110** | 0.14 | 0.19 | 0.34 |

The differences (Δ) in the color values particularly in Δb* show that after carrying out a second milling step with Paste B for 4, 6 and 10 hours using 0.3 mm YTZ^{®} beads a significant reduction of the yellow tint in the near off-specular range occurs.

In summary, all of the midcoat compositions making use of Pastes B, milled twice with differently sized YTZ^{®} beads (first stage: 1 mm; and second stage 0.3 mm) for different periods of time are apt to significantly reduce the yellow tint in the near off-specular range. The longer the second milling step with 0.3 mm YTZ^{®} beads (4, 6 and 10 hours), the more pronounced was the reduction of the yellow tint in the near off-specular range. This is believed to be due to the reduction of the Z-average particle size in the range from 116 nm to 100 nm, compared to an only 4-hour one-stage milling process with 1 mm YTZ^{®} beads (Z-average particle size: 181 nm) and a reduced particle size distribution span.

A crucial finding from the above experiments was that the best results regarding a reduction of yellow tint in the near off-specular range and increase in blueish tint in the far off-specular range were achieve for those coating compositions making use of such aqueous colloidal titanium dioxide dispersions which contain titanium dioxide particles having a Z-average particle size in the range from 30 nm to 220 nm as determined by dynamic light scattering and a particle size distribution span [(D90-D10)/(D50)] in the range from 0.7 to 1.5. If only one of both requirements is fulfilled, particularly if only the requirement of the afore-mentioned particle size distribution span is fulfilled, the paste (i.e., the aqueous colloidal titanium dioxide dispersion) may still have an undesirable high yellowish tint in the near off-specular range and/or no improvement of the blueish tint in the far off-specular range. It was also found that a reduction of the Z-average particle size by milling/grinding of the micronized titanium dioxide particles (agglomerates/aggregates) and the reduction of the particle size distribution span is significantly improved, if the aqueous colloidal titanium dioxide dispersions contain dispersing agents, as the main polymeric substance. While conventional mixtures of grinding resins, such as the polyurethane grinding resin E in Paste A, together with a dispersing agent, such as dispersing agent A in Paste A, may be used, a reduction of the Z-average particle size and particle size distribution span may require longer milling times and even smaller beads having a higher surface. Therefore, it is highly preferred to use such aqueous colloidal titanium dioxide dispersions, which do not contain grinding resins, but only dispersing agents, or only small amounts of grinding agents to achieve the Z-average particle size and particle size distribution span as claimed.

## Claims

1. An aqueous colloidal titanium dioxide dispersion comprising
i. titanium dioxide particles, the titanium dioxide particles having
a. a Z-average particle size in the range from 30 nm to 220 nm as determined by dynamic light scattering; and
b. a particle size distribution span [(D90-D10)/(D50)] in the range from 0.7 to 1.5;
ii. one or more dispersing agents comprising groups which bind to the titanium dioxide particles; and
iii. if necessary, one or more pH value adjusting compounds:;
**characterized in that**
the one or more dispersion agents contain at least partially neutralized carboxylic acid groups.

2. The aqueous colloidal titanium dioxide dispersion of claim 1, **characterized in that** the titanium dioxide particles have volume-based D10 values below 150 nm, volume-based D50 values below 220 nm, and volume-based D90 values below 350 nm, with the proviso that D90 values are higher than D50 values and D50 values are higher than D10 values.

3. The aqueous colloidal titanium dioxide dispersion of claim 1 or 2, **characterized in that** the Z-average particle size in the range from 80 nm to 190 nm as determined by dynamic light scattering.

4. The aqueous colloidal titanium dioxide dispersion of any one of claims 1 to 3, **characterized in that** the particle size distribution span [(D90-D10)/(D50)] in the range from 0.8 to 1.2.

5. The aqueous colloidal titanium dioxide dispersion of any one of claims 1 to 4, **characterized in that** the one or more dispersing agents are polymeric dispersing agents selected from the group consisting of polyesters, polyurethanes, polycarboxylate ethers and polymers formed from ethylenically unsaturated monomers.

6. The aqueous colloidal titanium dioxide dispersion of any one of claims 1 to 5, **characterized in that** the one or more dispersing agents is an at least partially neutralized (maleic acid)/(vinyl polyether) copolymer.

7. The aqueous colloidal titanium dioxide dispersion of any one of claims 1 to 6, **characterized in that** the dispersion further contains one or more organic solvents, preferably selected from the group consisting of alkanol, glycols, diglycols, glycol ethers, diglycol ethers, glycol esters, diglycol esters, glycol etheresters and diglycol etheresters.

8. The aqueous colloidal titanium dioxide dispersion of any one of claims 1 to 7, **characterized in that** the pH value of the dispersion is in the range from 6.2 to 7.8.

9. A method for producing the aqueous colloidal titanium dioxide dispersions of claims 1 to 8, the method comprising the steps of
A. forming a pre-mix comprising
a. one or more titanium dioxide pigments, the titanium dioxide pigments having
i. a Z-average particle size > 220 nm as determined by dynamic light scattering, and/or
ii. a particle size distribution span [(D90-D10)/(D50)] > 1.5
b. one or more dispersing agents comprising groups which bind to the one or more titanium dioxide pigments; and
c. if necessary, one or more pH value adjusting compounds;
and
B. grinding the pre-mix obtained in step A by use of a bead mill or shaker mill until titanium dioxide particles are obtained, which have a Z-average particle size in the range from 30 nm to 220 nm as determined by dynamic light scattering and have a particle size distribution span [(D90-D10)/(D50)] in the range from 0.7 to 1.5; and
C. adjusting the pH value, if necessary, by use of one or more pH adjusting compounds.

10. The method for producing the aqueous colloidal titanium dioxide dispersions according to claim 9, the pre-mix further comprising one or more organic solvents as defined in claim 7.

11. A titanium dioxide containing coating composition, comprising
(A) at least one film-forming polymer (A1), and in case of (A1) being externally crosslinkable, at least one crosslinking agent (A2);
(B) the components of the aqueous colloidal titanium dioxide dispersion as defined in of one or more of claims 1 to 9;
(C) preferably at least one type of colorant and/or filler, the colorant being selected from the group consisting of dyes and pigments, the pigments being selected from color pigments and/or effect pigments.

12. A coated substrate comprising a dried and/or cured coating layer formed from the titanium dioxide containing coating composition according to claim 11.

13. A method of preparing a coated substrate as defined in claim 12 comprising the step of applying a titanium dioxide containing coating composition as defined in claim 11 onto a substrate to form a coating layer and subsequently drying and/or curing the coating layer.

14. A coated substrate as defined in claim 12, the coated substrate being a multilayer-coated substrate, wherein at least one coating layer is a dried and/or cured coating layer formed from the titanium dioxide containing coating composition according to claim 11.

15. A method of preparing a multilayer-coated substrate as defined in claim 14, the method comprising the step of applying a titanium dioxide containing coating composition as defined in claim 11 onto a substrate and drying and/or curing the coating layer, the substrate being a substrate which is precoated with at least one coating composition and/or the coating layer formed by applying and drying and/or curing the titanium dioxide containing coating composition as defined in claim 11 is post-coated by at least one coating composition.

16. A use of the colloidal titanium dioxide dispersion as defined in any one or more of claims 1 to 8 in the manufacture of a coating composition, preferably an automotive coating composition.

## Patentansprüche

1. Wässrige kolloidale Titandioxiddispersion umfassend i. Titandioxidpartikel, wobei die Titandioxidpartikel aufweisen
a. eine Z-gemittelte Partikelgröße in dem Bereich von 30 nm bis 220 nm, wie bestimmt durch dynamische Lichtstreuung; und
b. eine Partikelgrößenverteilungsspanne [(D90-D10)/(D50)] in dem Bereich von 0,7 bis 1,5;
ii. ein oder mehrere Dispergiermittel, die Gruppen umfassen, die an die Titandioxidpartikel binden; und
iii. gegebenenfalls eine oder mehrere pH-Wert-einstellende Verbindungen;
**dadurch gekennzeichnet, dass**
das eine oder die mehreren Dispergiermittel wenigstens teilweise neutralisierte Carbonsäuregruppen enthalten.

2. Wässrige kolloidale Titandioxiddispersion nach Anspruch 1, **dadurch gekennzeichnet, dass** die Titandioxidpartikel D10-Werte auf Volumenbasis von unter 150 nm, D50-Werte auf Volumenbasis von unter 220 nm und D90-Werte auf Volumenbasis von unter 350 nm aufweisen, mit der Maßgabe, dass D90-Werte höher als D50-Werte sind und D50-Werte höher als D10-Werte sind.

3. Wässrige kolloidale Titandioxiddispersion nach Anspruch 1 oder 2, **dadurch gekennzeichnet, dass** die Z-gemittelte Partikelgröße in dem Bereich von 80 nm bis 190 nm, wie bestimmt durch dynamische Lichtstreuung, liegt.

4. Wässrige kolloidale Titandioxiddispersion nach einem der Ansprüche 1 bis 3, **dadurch gekennzeichnet, dass** die Partikelgrößenverteilungsspanne [(D90-D10)/(D50)] in dem Bereich von 0,8 bis 1,2 liegt.

5. Wässrige kolloidale Titandioxiddispersion nach einem der Ansprüche 1 bis 4, **dadurch gekennzeichnet, dass** das eine oder die mehreren Dispergiermittel polymere Dispergiermittel ausgewählt aus der Gruppe bestehend aus Polyestern, Polyurethanen, Polycarboxylatethern und aus ethylenisch ungesättigten Monomeren gebildeten Polymeren sind.

6. Wässrige kolloidale Titandioxiddispersion nach einem der Ansprüche 1 bis 5, **dadurch gekennzeichnet, dass** das eine oder die mehreren Dispergiermittel ein wenigstens teilweise neutralisiertes (Maleinsäure)/(Vinylpolyether)-Copolymer sind.

7. Wässrige kolloidale Titandioxiddispersion nach einem der Ansprüche 1 bis 6, **dadurch gekennzeichnet, dass** die Dispersion ferner ein oder mehrere organische Lösungsmittel enthält, vorzugsweise ausgewählt aus der Gruppe bestehend aus Alkanol, Glycolen, Diglycolen, Glycolethern, Diglycolethern, Glycolestern, Diglycolestern, Glycoletherestern und Diglycoletherestern.

8. Wässrige kolloidale Titandioxiddispersion nach einem der Ansprüche 1 bis 7, **dadurch gekennzeichnet, dass** der pH-Wert der Dispersion in dem Bereich von 6,2 bis 7,8 liegt.

9. Verfahren zur Herstellung der wässrigen kolloidalen Titandioxiddispersionen nach Ansprüchen 1 bis 8, wobei das Verfahren die Schritte umfasst
A. Bilden einer Vormischung umfassend
a. ein oder mehrere Titandioxidpigmente, wobei die Titandioxidpigmente aufweisen
i. eine Z-gemittelte Partikelgröße > 220 nm, wie bestimmt durch dynamische Lichtstreuung, und/oder
ii. eine Partikelgrößenverteilungsspanne [(D90-D10)/(D50)] > 1,5
b. ein oder mehrere Dispergiermittel, die Gruppen umfassen, die an das eine oder die mehreren Titandioxidpigmente binden; und
c. nötigenfalls eine oder mehrere pH-Wert-einstellende Verbindungen;
und
B. Mahlen der bei Schritt A erhaltenen Vormischung unter Verwendung einer Perlmühle oder Schüttelmühle bis Titandioxidpartikel erhalten werden, die eine Z-gemittelte Partikelgröße in dem Bereich von 30 nm bis 220 nm, wie bestimmt durch dynamische Lichtstreuung, aufweisen und eine Partikelgrößenverteilungsspanne [(D90-D10)/(D50)] in dem Bereich von 0,7 bis 1,5 aufweisen; und
C. nötigenfalls Einstellen des pH-Werts mithilfe einer oder mehrerer pH-einstellender Verbindungen.

10. Verfahren zur Herstellung der wässrigen kolloidalen Titandioxiddispersionen nach Anspruch 9, wobei die Vormischung ferner ein oder mehrere organische Lösungsmittel nach Anspruch 7 umfasst.

11. Titandioxid-enthaltende Beschichtungszusammensetzung umfassend
(A) wenigstens ein filmbildendes Polymer (A1) und in dem Fall, dass (A1) extern vernetzbar ist, wenigstens ein Vernetzungsmittel (A2);
(B) die Komponenten der wässrigen kolloidalen Titandioxiddispersion wie definiert in einem oder mehreren der Ansprüche 1 bis 9;
(C) vorzugsweise wenigstens einen Typ von Farbmittel und/oder Füllstoff, wobei das Farbmittel ausgewählt ist aus der Gruppe bestehend aus Farbstoffen und Pigmenten, wobei die Pigmente ausgewählt sind aus Farbpigmenten und/oder Effektpigmenten.

12. Beschichtetes Substrat, umfassend eine getrocknete und/oder gehärtete Beschichtungsschicht, die aus der Titandioxid-enthaltenden Beschichtungszusammensetzung nach Anspruch 11 gebildet ist.

13. Verfahren zur Herstellung eines beschichteten Substrats nach Anspruch 12, umfassend den Schritt des Aufbringens einer Titandioxid-enthaltenden Beschichtungszusammensetzung nach Anspruch 11 auf ein Substrat, um eine Beschichtungsschicht zu bilden, und anschließendes Trocknen und/oder Härten der Beschichtungsschicht.

14. Beschichtetes Substrat nach Anspruch 12, wobei das beschichtete Substrat ein mehrschichtig beschichtetes Substrat ist, wobei wenigstens eine Beschichtungsschicht eine getrocknete und/oder gehärtete Beschichtungsschicht ist, die aus der Titandioxid-enthaltenden Beschichtungszusammensetzung nach Anspruch 11 gebildet ist.

15. Verfahren zur Herstellung eines mehrschichtig beschichteten Substrats nach Anspruch 14, wobei das Verfahren den Schritt des Aufbringens einer Titandioxid-enthaltenden Beschichtungszusammensetzung nach Anspruch 11 auf ein Substrat und des Trocknens und/oder Härtens der Beschichtungsschicht umfasst, wobei das Substrat ein Substrat ist, das mit wenigstens einer Beschichtungszusammensetzung vorbeschichtet ist, und/oder die durch Aufbringen und Trocknen und/oder Härten der titandioxidhaltigen Beschichtungszusammensetzung nach Anspruch 11 gebildete Beschichtungsschicht mit wenigstens einer Beschichtungszusammensetzung nachbeschichtet ist.

16. Verwendung der kolloidalen Titandioxiddispersion nach einem oder mehreren der Ansprüche 1 bis 8 bei der Herstellung einer Beschichtungszusammensetzung, vorzugsweise einer Automobil-Beschichtungszusammensetzung.

## Revendications

1. Dispersion aqueuse de dioxyde de titane colloïdale comprenant
i. des particules de dioxyde de titane, les particules de dioxyde de titane ayant
a. une taille moyenne de particule Z dans la plage de 30 nm à 220 nm, comme déterminée par diffusion dynamique de la lumière ; et
b. une étendue de distribution de tailles de particules [(D90-D10)/(D50)] dans la plage de 0,7 à 1,5 ;
ii. un ou plusieurs agents dispersants comprenant des groupes qui se lient aux particules de dioxyde de titane ; et
iii. si nécessaire, un ou plusieurs composés d'ajustement de la valeur du pH ;
**caractérisée en ce que**
l'agent ou les agents de dispersion contiennent des groupes acide carboxylique au moins partiellement neutralisés.

2. Dispersion aqueuse de dioxyde de titane colloïdale selon la revendication 1, **caractérisée en ce que** les particules de dioxyde de titane ont des valeurs D10 basées sur le volume inférieures à 150 nm, des valeurs D50 basées sur le volume inférieures à 220 nm, et des valeurs D90 basées sur le volume inférieures à 350 nm, à condition que les valeurs D90 soient supérieures aux valeurs D50 et que les valeurs D50 soient supérieures aux valeurs D10.

3. Dispersion aqueuse de dioxyde de titane colloïdale selon la revendication 1 ou 2, **caractérisée en ce que** la taille moyenne de particule Z est dans la plage de 80 nm à 190 nm, comme déterminée par diffusion dynamique de la lumière.

4. Dispersion aqueuse de dioxyde de titane colloïdale selon l'une quelconque des revendications 1 à 3, **caractérisée en ce que** l'étendue de distribution de tailles de particules [(D90-D10)/(D50)] se situe dans la plage de 0,8 à 1,2.

5. Dispersion aqueuse de dioxyde de titane colloïdale selon l'une quelconque des revendications 1 à 4, **caractérisée en ce que** l'agent ou les agents dispersants sont des agents dispersants polymériques choisis dans le groupe constitué par les polyesters, les polyuréthanes, les éthers de polycarboxylate et les polymères formés à partir de monomères éthyléniquement insaturés.

6. Dispersion aqueuse de dioxyde de titane colloïdale selon l'une quelconque des revendications 1 à 5, **caractérisée en ce que** l'agent ou les agents dispersants est/sont un copolymère (acide maléique)/(polyéther vinylique) au moins partiellement neutralisé.

7. Dispersion aqueuse de dioxyde de titane colloïdale selon l'une quelconque des revendications 1 à 6, **caractérisée en ce que** la dispersion contient en outre un ou plusieurs solvants organiques, de préférence choisis dans le groupe constitué par un alcanol, les glycols, les diglycols, les éthers de glycol, les éthers de diglycol, les esters de glycol, les esters de diglycol, les éthers-esters de glycol et les éthers-esters de diglycol.

8. Dispersion aqueuse de dioxyde de titane colloïdale selon l'une quelconque des revendications 1 à 7, **caractérisée en ce que** la valeur du pH de la dispersion se situe dans la plage de 6,2 à 7,8.

9. Procédé de production des dispersions aqueuses de dioxyde de titane colloïdales selon les revendications 1 à 8, le procédé comprenant les étapes de
A. formation d'un prémélange comprenant
a. un ou plusieurs pigments de dioxyde de titane, les pigments de dioxyde de titane ayant
i. une taille moyenne de particule Z > 220 nm, comme déterminée par diffusion dynamique de la lumière, et/ou
ii. une étendue de distribution de tailles de particules [(D90-D10)/(D50)] > 1,5
b. un ou plusieurs agents dispersants comprenant des groupes qui se lient au ou aux pigments de dioxyde de titane ; et
c. si nécessaire, un ou plusieurs composés d'ajustement de la valeur du pH ;
et
B. broyage du prémélange obtenu à l'étape A au moyen d'un broyeur à billes ou d'un broyeur à secouage jusqu'à obtention de particules de dioxyde de titane, qui ont une taille moyenne de particule Z dans la plage de 30 nm et 220 nm, déterminée par diffusion dynamique de la lumière, et une étendue de distribution de tailles de particules [(D90-D10)/(D50)] dans la plage de 0,7 et 1,5 ; et
C. ajustement de la valeur du pH, si nécessaire, au moyen d'un ou plusieurs composés d'ajustement du pH.

10. Procédé de production des dispersions aqueuses de dioxyde de titane colloïdales selon la revendication 9, le prémélange comprenant en outre un ou plusieurs solvants organiques tels que définis dans la revendication 7.

11. Composition de revêtement contenant du dioxyde de titane, comprenant
(A) au moins un polymère filmogène (A1) et, dans le cas où (A1) est réticulable extérieurement, au moins un agent de réticulation (A2) ;
(B) les composants de la dispersion aqueuse de dioxyde de titane colloïdale telle que définie dans une ou plusieurs des revendications 1 à 9 ;
(C) de préférence au moins un type de matière colorante et/ou de charge, la matière colorante étant choisie dans le groupe constitué par les colorants et les pigments, les pigments étant choisis parmi les pigments colorés et/ou les pigments à effet.

12. Substrat revêtu comprenant une couche de revêtement séchée et/ou durcie formée à partir de la composition de revêtement contenant du dioxyde de titane selon la revendication 11.

13. Procédé de préparation d'un substrat revêtu tel que défini dans la revendication 12, comprenant l'étape d'application d'une composition de revêtement contenant du dioxyde de titane telle que définie dans la revendication 11 sur un substrat pour former une couche de revêtement et subséquemment séchage et/ou durcissement de la couche de revêtement.

14. Substrat revêtu tel que défini dans la revendication 12, le substrat revêtu étant un substrat revêtu de plusieurs couches, dans lequel au moins une couche de revêtement est une couche de revêtement séchée et/ou durcie formée à partir de la composition de revêtement contenant du dioxyde de titane selon la revendication 11.

15. Procédé de préparation **d'un** substrat revêtu de plusieurs couches tel que défini dans la revendication 14, le procédé comprenant l'étape d'application d'une composition de revêtement contenant du dioxyde de titane telle que définie dans la revendication 11 sur un substrat et séchage et/ou durcissement de la couche de revêtement, le substrat étant un substrat qui est **pré-**revêtu avec au moins une composition de revêtement et/ou la couche de revêtement formée par application et séchage et/ou durcissement de la composition de revêtement contenant du dioxyde de titane telle que définie dans la revendication 11 est post-revêtue par au moins une composition de revêtement.

16. Utilisation de la dispersion de dioxyde de titane colloïdale telle que définie dans l'une quelconque ou plusieurs des revendications 1 à 8 dans la fabrication **d'une** composition de revêtement, de préférence une composition de revêtement pour automobile.
